# EUROPÄISCHE PATENTANMELDUNG

(11) **EP 4 316 231 A1**
(43) Veröffentlichungstag der Anmeldung: **07.02.2024**
(21) Anmeldenummer: 23189364.5
(22) Anmeldetag: 03.08.2023
(51) Int. Cl.: A01C 5/06, A01C 7/20

(54) **SCHARVORRICHTUNG UND LANDWIRTSCHAFTLICHE ARBEITSMASCHINE MIT EINER MEHRZAHL DERARTIGER SCHARVORRICHTUNGEN**

(30) Priorität: 04.08.2022 DE 102022119611
(71) Anmelder: Horsch Maschinen GmbH, 92421 Schwandorf (DE)
(72) Erfinder: Horsch, Philipp, 92421 Schwandorf (DE); Haselhoff, Alexander, 92421 Schwandorf (DE)
(74) Vertreter: v. Bezold & Partner Patentanwälte - PartG mbB

(57) **Zusammenfassung**

Die vorliegende Erfindung betrifft eine Scharvorrichtung (1), vorzugsweise Säscharvorrichtung (1), zur Einbringung eines landwirtschaftlichen Guts in eine Furche (F) eines Bodens (B) entlang einer Bewegungsrichtung (BR) der Scharvorrichtung (1), mit einem Scharträger (10) zur Montage an einen Tragrahmen (110) einer landwirtschaftlichen Arbeitsmaschine (100), wobei an dem Scharträger (10) eine Schneidscheibeneinheit (11) zur Erzeugung der Furche (F) angeordnet ist, wobei die Scharvorrichtung (1) zur Bildung einer konfigurierbaren Scharwerkzeugeinheit (20, 21, 22, 32) einen Werkzeugträger (20) umfasst, wobei der Werkzeugträger (20) zumindest zur Montage einer Kufeneinheit (21) der Scharvorrichtung (1) zur Erzeugung der Furche (F) und einer Rolleneinheit (22) der Scharvorrichtung (1) zum Abbremsen des landwirtschaftlichen Guts im Bereich der Furche (B) und/oder zum Andrücken des landwirtschaftlichen Guts im Bereich der Furche (B) konfiguriert ist, und wobei der Werkzeugträger (20) zur Montage an dem Scharträger (10) und/oder zur Montage an dem Tragrahmen (110) konfiguriert ist, wobei vorzugsweise der Werkzeugträger (20) an dem Scharträger (10) montiert ist. Die vorliegende Erfindung betrifft ferner eine landwirtschaftliche Arbeitsmaschine (100) mit einer Mehrzahl derartiger Scharvorrichtungen (1).

## Beschreibung

Die vorliegende Erfindung liegt auf dem Gebiet der Landtechnik und betrifft eine Scharvorrichtung und eine landwirtschaftliche Arbeitsmaschine mit einer Mehrzahl derartiger Scharvorrichtungen.

Die Ausbringung und Einarbeitung von landwirtschaftlichem Gut in Form von Saatgut und/oder Düngemittel in einen Boden hat in der Landwirtschaft eine zentrale Bedeutung. Damit beispielsweise ein möglichst gleichmäßiges Wachstum von Pflanzen erreicht werden kann, ist nach der Bearbeitung des Bodens eine möglichst gleichmäßige Abgabe des Saatguts in den Boden zu erstreben. Das Saatgut wird hierbei in der Regel in eine zu erzeugende Saatfurche eingebracht.

Neben gezielter, das heißt vereinzelter Abgabe von beispielsweise Körnersaatgut ist vor allem eine Ablage jedes einzelnen Saatkorns in möglichst gleichmäßiger Tiefe in der Saatfurche zu realisieren. Mit anderen Worten muss ein Ziel sein, dass die Sohle der Saatfurche gleichmäßig tief in dem Boden erzeugt wird.

Um eine wünschenswerte Einarbeitung des landwirtschaftlichen Guts in gleichmäßiger Tiefe zu erreichen, umfassen landwirtschaftliche Arbeitsmaschinen, beispielsweise in Form von Sämaschinen, so genannte Säscharvorrichtungen (kurz "Säschare"). In der Regel verfügen Säschare über eine Schneidscheibe oder über zwei Schneidscheiben, um eine Saatfurche zu erzeugen. Zur Zuführung des Saatguts ist ein Saatrohr vorgesehen. Ferner verfügen Säschare über eine Fangrolle, um das Saatgut vor dem Eintritt in die Saatfurche abzufangen und/oder abzubremsen, sowie über eine dem Saatrohr nachgeordnete Druckrolle, um den bearbeiteten, gelockerten Boden und somit das Saatgut zumindest teilweise anzudrücken, wenn sich das Saatgut auf der Sohle der Saatfurche im Boden befindet. Ferner dient die Druckrolle häufig auch zur Führung des Säschars.

Somit kommt der Erzeugung einer Saatfurche im Zuge der Einarbeitung entsprechenden landwirtschaftlichen Guts in den Boden eine gewichtige Rolle zu. Um die Erzeugung der Saatfurche weiter zu verbessern und vor allem eine stabile Ausformung der Saatfurche zu erzielen, kann ferner vorgesehen sein, eine Scharkufe (kurz "Kufe") an dem Säschar zu platzieren. Die Scharkufe wird auch als so genannter "Furchenöffner" oder "Furchenformer" bezeichnet.

Ferner sind Säschare und deren Ausbildungen und/oder Konfigurationen aus der Patentliteratur des Stands der Technik bekannt.

Die internationale Patentanmeldung Nr. WO 2017/036896 A1 betrifft eine Säscharanordnung einer landwirtschaftlichen Maschine zur Bodenbearbeitung und/oder zum Ausbringen von Verteilgütern wie Saatgut oder Dünger. Zur Montage der Komponenten der Säscharanordnung ist ein Scharrahmen vorgesehen, an welchem eine drehbar gelagerte Schneidscheibe und ein Zinkenwerkzeug zur Erzeugung einer Saatfurche montiert sind. Ferner ist an dem Scharrahmen eine drehbar gelagerte Druckrolle zum Schließen der Saatfurche montiert, sowie eine Dosiervorrichtung mit einem Saatrohr, um Verteilgut vereinzelt abzugeben und zur Saatfurche zu transportieren. Dem Auslass des Saatrohrs nachgelagert ist ein scheibenförmiges Fangelement. Um eine dauerhafte, gleichmäßige Verteilgutabgabe in die Saatfurche zu gewährleisten, ist vorgesehen, dass die Dosiervorrichtung, das Saatrohr und das Fangelement eine bauliche Einheit bilden und an einem schwenkbar am Scharrahmen oder einer Rahmenkonstruktion angebrachten Träger montiert sind, wodurch eine Anordnung des Auslasses des Saatrohrs zu dem Fangelement stets weitgehend konstant gehalten wird.

Aus der europäischen Patentschrift Nr. EP 3 281 509 B1 ist eine Einzelkornsäeinheit für eine Einzelkornsämaschine bekannt. Ein vertikal schwenkbarer Scharträger mit einem daran befestigten Schar umfasst des Weiteren eine Vereinzelungsvorrichtung für Saatgut, eine Fangrolle und einen zur Fangrolle führenden Saatgutkanal. Ferner ist mit dem Scharträger ein vertikal beweglich gelagerter Andruckrollenträger mit einer Andruckrolle verbunden. Damit einerseits eine präzise Ablage der Saatkörner als auch hohe Arbeitsgeschwindigkeiten realisiert werden können, umfasst der Saatgutkanal zwischen der Vereinzelungsvorrichtung und seinem unteren Endabschnitt einen biegsamen Schlauch oder einen teleskopartigen Abschnitt.

In der europäischen Patentanmeldung Nr. EP 2 805 594 A1 wird eine Sämaschine mit mehreren Reihen von Ausbringelementen beschrieben, welche jeweils einen Scharkörper zum Einbringen einer Särille in den Boden umfassen. Um günstige Ausbringbedingungen für die Einzelkornablage zu schaffen, umfassen die Scharkörper Furchenformer mit integrierten Saatgutleitungen oder Saatgutführungskanälen für Drillsaatgut, Dünger und Einzelkornsaatgut.

Bei den bekannten Lösungen aus dem Stand der Technik ist beispielsweise nachteilig, dass diese nur mit einer Einzelkorndosiervorrichtung einsetzbar sind und/oder mit dem Scharträger, an welchem die eine oder die zwei Schneidscheiben gelagert sind, starr verbunden sind, sodass ein individuelles und somit separates Ausweichen des Säschars zur Vermeidung von Kollisionen mit Hindernissen, beispielsweise größeren Lesesteinen, nicht realisierbar ist. Damit einhergehend sind beispielsweise Beschädigungen des Säschars und/oder eine verringerte Arbeitsflexibilität, welche beispielsweise Betriebsausfälle und Reparaturen nach sich ziehen.

Es ist eine Aufgabe der vorliegenden Erfindung, eine verbesserte Scharvorrichtung, vorzugsweise eine verbesserte Säscharvorrichtung, und eine landwirtschaftliche Arbeitsmaschine mit einer Mehrzahl derartiger Scharvorrichtungen bereitzustellen, welche vor allem durch eine verbesserte Anordnung einer Einheit zur Erzeugung und Optimierung einer Furche und/oder einer Einheit zum Abbremsen und/oder Andrücken von landwirtschaftlichem Gut in der Furche gekennzeichnet ist.

Die Aufgabe wird durch die Merkmale der Ansprüche 1 und 16 gelöst. Weitere Ausführungsbeispiele und Anwendungen der vorliegenden Erfindung ergeben sich aus den abhängigen Ansprüchen und werden in der folgenden Beschreibung unter teilweiser Bezugnahme auf die Figuren näher erläutert.

Die vorliegende Erfindung betrifft nach einem ersten allgemeinen Gesichtspunkt eine Scharvorrichtung, vorzugsweise Säscharvorrichtung, zur Einbringung eines landwirtschaftlichen Guts in eine Furche eines Bodens entlang einer Bewegungsrichtung der Scharvorrichtung, mit einem Scharträger zur Montage an einen Tragrahmen einer landwirtschaftlichen Arbeitsmaschine, wobei an dem Scharträger eine Schneidscheibeneinheit zur Erzeugung der Furche angeordnet ist, wobei die Scharvorrichtung zur Bildung einer konfigurierbaren Scharwerkzeugeinheit einen Werkzeugträger umfasst, wobei der Werkzeugträger zumindest zur Montage einer Kufeneinheit der Scharvorrichtung zur Erzeugung und/oder Öffnung der Furche und zur Montage einer Rolleneinheit der Scharvorrichtung zum Fangen und/oder zum Abbremsen des landwirtschaftlichen Guts im Bereich der Furche und/oder zum Andrücken des landwirtschaftlichen Guts im Bereich der Furche konfiguriert ist, und wobei der Werkzeugträger zur Montage an dem Scharträger und/oder zur Montage an dem Tragrahmen konfiguriert ist.

Die Scharvorrichtung gemäß der vorliegenden Erfindung ist beispielsweise durch eine unabhängig und/oder selbstständig konfigurierbare Scharwerkzeugeinheit gekennzeichnet. Die Scharwerkzeugeinheit kann über den Werkzeugträger mittels zumindest einer Schraubverbindung und/oder mittels zumindest einer Lagerverbindung (beispielsweise mittels zumindest einer Gleitlagerverbindung und/oder mittels einer Wälzlagerverbindung) und/oder mittels zumindest einer Gelenk- und/oder Lenkerverbindung und/oder mittels zumindest einer Schwingenverbindung und/oder mittels zumindest einer Aktuatoreinrichtung (beispielsweise mittels zumindest einem Linearaktuator in Form eines doppeltwirkenden Zylinders) an dem Scharträger und/oder an dem Tragrahmen der landwirtschaftlichen Arbeitsmaschine montiert werden oder montiert sein.

Die Bewegungsrichtung kann beispielsweise eine Fahrtrichtung oder eine Zugrichtung einer landwirtschaftlichen Arbeitsmaschine sein. Die Schneidscheibeneinheit kann beispielsweise zumindest eine Schneidscheibe oder vorzugsweise zwei Schneidscheiben umfassen. Die zumindest zwei Schneidscheiben können drehbar gelagert sein und/oder zueinander schräg angestellt sein. Die zumindest zwei Schneidscheiben können zur Erzeugung der Furche im Wesentlichen einen Schneidkeil zur Verdrängung von Material des Bodens bilden. Die Kufeneinheit kann beispielsweise einen keilförmigen Endabschnitt umfassen, welcher zur Erzeugung und/oder Öffnung und somit zur weiteren Optimierung der Furche dient. Die Kufeneinheit kann vorzugsweise eine einzige Kufe umfassen. Die Kufe kann massiv, teilmassiv, oder als offener, halboffener oder geschlossener Hohlkörper mit jeweiligen Wänden ausgebildet sein.

Der Werkzeugträger ist vorzugsweise zumindest zur direkten und/oder unmittelbaren Montage der Kufeneinheit und/oder der Rolleneinheit konfiguriert. Mit anderen Worten kann der Werkzeugträger zur direkten und/oder unmittelbaren und/oder lösbaren Befestigung der Kufeneinheit und/oder der Rolleneinheit an den Werkzeugträger konfiguriert sein. Der Werkzeugträger kann hierzu einen jeweiligen individuellen und/oder separaten Werkzeugmontageabschnitt umfassen. Dadurch wird beispielsweise ein jeweiliges weiteres und/oder zusätzliches Montageelement zur Montage des jeweiligen Werkzeugs (Kufeneinheit, Rolleneinheit, Leitungseinheit, etc.), beispielsweise in Form eines Adapters, entbehrlich. In einer montierten Konfiguration kann der Werkzeugträger der konfigurierbaren Scharwerkzeugeinheit zumindest eine Kufeneinheit und eine Rolleneinheit umfassen. Es ist möglich, dass der Werkzeugträger weitere Einheiten, vorzugsweise als Werkzeug konfigurierte und/oder ausgebildete Einheiten umfasst.

Der Werkzeugträger ist vorzugsweise als ein separates Einzelteil ausgebildet und/oder vorzugsweise an dem Scharträger montiert. Die Ausführung als separates Einzelteil ermöglicht eine individuelle Konfiguration und/oder Einstellung der Scharwerkzeugeinheit unabhängig von den weiteren Einheiten und/oder Komponenten der Scharvorrichtung. Durch die Ausbildung als separates Einzelteil kann der Werkzeugträger selbst beispielsweise in verschiedenen Lagen, das heißt Positionen und/oder Ausrichtungen, an dem Scharträger montiert werden oder montiert sein, je nach Anforderung und Einsatzgebiet der Scharvorrichtung. Die Rolleneinheit kann vorzugsweise eine einzige Rolle umfassen.

Zusätzlich oder alternativ kann der Werkzeugträger zur autarken und/oder zumindest zur von dem Scharträger unabhängigen Montage der Kufeneinheit und/oder der Rolleneinheit an den Werkzeugträger konfiguriert sein. Somit ist es beispielsweise möglich, die Scharwerkzeugeinheit im Zuge der Montage der Scharvorrichtung bereits vorzumontieren, oder jeweilige Einheiten bei Bedarf einfach zu demontieren. In diesem Zusammenhang kann der Werkzeugträger alle notwendigen oder benötigten Montageabschnitte und/oder Montageelemente zur Montage der Kufeneinheit und/oder der Rolleneinheit aufweisen. Dazu zählen beispielsweise Durchgangslöcher, Flansche, Anschläge, Absätze, Vorsprünge, Eingriffe, etc. Mit anderen Worten kann der Werkzeugträger zur Bildung der konfigurierbaren Scharwerkzeugeinheit eine zentrale und/oder konfigurierbare Systemtragstruktur der Scharvorrichtung darstellen.

Gemäß einem weiteren Aspekt der vorliegenden Erfindung kann vorgesehen sein, dass der Werkzeugträger zur drehbaren und/oder translatorischen Lagerung an dem Scharträger und/oder an dem Tragrahmen konfiguriert ist, und/oder dass der Werkzeugträger zur federnden Lagerung, vorzugsweise mittels zumindest einem Zugfederelement und/oder mittels zumindest einem Druckfederelement, an dem Scharträger und/oder an dem Tragrahmen konfiguriert ist, und/oder dass der Werkzeugträger zur Lagerung mittels einer Parallelogrammführung an dem Scharträger und/oder an dem Tragrahmen konfiguriert ist. Dadurch lässt sich die Scharvorrichtung beispielsweise jeweiligen Anforderungen entsprechend individuell konfigurieren und/oder dem Einsatzgebiet, beispielsweise einem Ackerboden mit vergleichsweise hohem Anteil an Lesesteinen, angepasst betreiben.

Es ist möglich, dass die Schneidscheibeneinheit als Doppelschneidscheibeneinheit mit einer ersten Schneidscheibe und mit einer zweiten Schneidscheibe ausgebildet ist, und dass in einer Ansicht in der Bewegungsrichtung und somit vorzugsweise bei einem Blick in die Bewegungsrichtung die Kufeneinheit und/oder die Rolleneinheit zumindest abschnittsweise zwischen der ersten Schneidscheibe und der zweiten Schneidscheibe angeordnet ist. Eine erste Schneidscheibe ist hierbei links und eine zweite Schneidscheibe ist hierbei rechts der Kufeneinheit und/oder der Rolleneinheit angeordnet. Es ist auch möglich, dass die Schneidscheibeneinheit, umfassend eine erste Schneidscheibe und eine zweite Schneidscheibe, die Kufeneinheit, beispielsweise einen Bügel oder einen Arm einer Kufe, zumindest abschnittsweise beherbergt oder umgibt.

Gemäß einem weiteren Gesichtspunkt der vorliegenden Erfindung kann vorgesehen sein, dass die Rolleneinheit eine Rolle mit einer Rollenachse, um welche die Rolle drehbar gelagert ist, umfasst, und dass in einer Ansicht senkrecht zu der Bewegungsrichtung, vorzugsweise in einer Seitenansicht, die Rollenachse innerhalb einer Außenkontur einer ersten Schneidscheibe und/oder einer Außenkontur einer zweiten Schneidscheibe der Schneidscheibeneinheit, vorzugsweise innerhalb eines definierten Bereichs innerhalb einer Außenkontur einer ersten Schneidscheibe und/oder einer Außenkontur einer zweiten Schneidscheibe der Schneidscheibeneinheit angeordnet ist, oder wobei in einer Ansicht senkrecht zu der Bewegungsrichtung die Rollenachse außerhalb einer Außenkontur einer ersten Schneidscheibe und/oder außerhalb einer Außenkontur einer zweiten Schneidscheibe der Schneidscheibeneinheit, vorzugsweise innerhalb eines definierten Bereichs außerhalb einer Außenkontur einer ersten Schneidscheibe und/oder einer Außenkontur einer zweiten Schneidscheibe der Schneidscheibeneinheit, angeordnet ist. Der definierte Bereich kann vorzugsweise durch den Werkzeugträger vorgegeben sein und mehrere Befestigungsabschnitte, beispielsweise umfassend Durchgangslöcher, für die Montage der Rollenachse umfassen.

Es ist möglich, dass die Scharvorrichtung eine Nachlaufrolleneinheit zur Führung der Scharvorrichtung in der Furche und/oder zum Andrücken des Bodens in der Furche und/oder zum Schließen der Furche aufweist, wobei die Nachlaufrolleneinheit dem Werkzeugträger und/oder der Schneidscheibeneinheit in der Bewegungsrichtung nachgeordnet ist. Mit anderen Worten ist in einer Ansicht in der Bewegungsrichtung die Nachlaufrolleneinheit vor der Rolleneinheit und/oder vor der Kufeneinheit und/oder vor der Schneidscheibeneinheit angeordnet.

Gemäß einem weiteren Aspekt der vorliegenden Erfindung kann vorgesehen sein, dass die Scharvorrichtung zumindest eine Leitungseinheit zum Transport des landwirtschaftlichen Guts umfasst, wobei die zumindest eine Leitungseinheit zumindest einen Auslass zur Zuführung des landwirtschaftlichen Guts in die Furche umfasst, wobei in einer Ansicht entgegen der Bewegungsrichtung und somit entgegengesetzt zu der Bewegungsrichtung der zumindest eine Auslass vor der Kufeneinheit und vor der Rolleneinheit angeordnet ist, oder wobei der zumindest eine Auslass zwischen der Kufeneinheit und der Rolleneinheit angeordnet ist, oder wobei der zumindest eine Auslass an der Kufeneinheit angeordnet ist.

Es ist auch möglich, dass die Scharvorrichtung zumindest eine erste Leitungseinheit zum Transport des landwirtschaftlichen Guts in Form von Saatgut und zumindest eine zweite Leitungseinheit zum Transport des landwirtschaftlichen Guts in Form von Düngemittel umfasst, wobei die zumindest eine erste Leitungseinheit zumindest einen ersten Auslass zur Zuführung des landwirtschaftlichen Guts in die Furche umfasst und die zumindest eine zweite Leitungseinheit zumindest einen zweiten Auslass zur Zuführung des landwirtschaftlichen Guts in die Furche umfasst, wobei in einer Ansicht entgegen der Bewegungsrichtung der zumindest eine erste Auslass und der zumindest eine zweite Auslass vor der Kufeneinheit und vor der Rolleneinheit oder zwischen der Kufeneinheit und der Rolleneinheit angeordnet ist, oder wobei in einer Ansicht entgegen der Bewegungsrichtung zumindest ein Auslass des zumindest einen ersten Auslasses und des zumindest einen zweiten Auslasses vor der Kufeneinheit und vor der Rolleneinheit angeordnet ist, und zumindest ein weiterer Auslass des zumindest einen ersten Auslasses und des zumindest einen zweiten Auslasses zwischen der Kufeneinheit und der Rolleneinheit angeordnet ist. Dadurch wird beispielsweise gewährleistet, sowohl Düngemittel als auch Saatgut unabhängig voneinander in definierten Bereichen der Furche einzubringen.

Gemäß einem weiteren Gesichtspunkt der vorliegenden Erfindung kann vorgesehen sein, dass zumindest eine Leitungseinheit zumindest abschnittsweise rohrförmig und/oder kanalförmig ausgebildet ist, und/oder wobei zumindest eine Leitungseinheit zumindest abschnittsweise formstabil und/oder elastisch verformbar ausgebildet ist, und/oder wobei zumindest eine Leitungseinheit zumindest abschnittsweise an dem Werkzeugträger montiert ist.

Es ist möglich, dass der Werkzeugträger zur Montage der zumindest einen Leitungseinheit, vorzugsweise eines Abschnitts der zumindest einen Leitungseinheit, konfiguriert ist, und einen Werkzeugmontageabschnitt für die zumindest eine Leitungseinheit, einen Werkzeugmontageabschnitt für die Kufeneinheit und einen Werkzeugmontageabschnitt für die Rolleneinheit umfasst, wobei die jeweiligen Werkzeugmontageabschnitte an dem Werkzeugträger zueinander beabstandet angeordnet und/oder ausgebildet sind. Dadurch lässt sich beispielsweise der Werkzeugträger um zumindest eine weitere Einheit konfigurieren, durch welche die Scharwerkzeugeinheit der Scharvorrichtung gekennzeichnet ist. Ein Werkzeugmontageabschnitt kann zur Ausbildung einer lösbaren im Wesentlichen formschlüssigen und/oder im Wesentlichen kraftschlüssigen Verbindung mit einer jeweiligen Einheit konfiguriert sein. Die lösbare im Wesentlichen formschlüssige und/oder im Wesentlichen kraftschlüssige Verbindung kann zumindest eine von folgenden Verbindungen umfassen und/oder als solche ausgebildet sein: eine Schraubverbindung, eine Steckverbindung, eine Schnappverbindung, und/oder eine Rastverbindung.

Der Werkzeugträger kann an dem Scharträger starr montiert sein. Der Werkzeugträger kann somit in einem an den Scharträger montierten Zustand gegenüber dem Scharträger unbeweglich befestigt sein. Der Werkzeugträger kann zur Montage und/oder zur Aufnahme an den Scharträger abschnittsweise gabelförmig, hakenförmig, plattenförmig, schalenförmig und/oder schellenförmig ausgebildet sein und/oder zumindest einen jeweiligen solchen Aufnahmeabschnitt umfassen. Der Werkzeugträger kann zur Ausbildung zumindest einer Nut-Feder-Verbindung mit dem Scharträger und/oder zumindest einer Schraubverbindung mit dem Scharträger und/oder zumindest einer Bolzenverbindung mit dem Scharträger konfiguriert sein.

Die Kufeneinheit kann zur Montage der zumindest einen Leitungseinheit, vorzugsweise des zumindest einen Auslasses, konfiguriert sein. Dadurch kann die zumindest eine Leitungseinheit einerseits an dem Werkzeugträger und andererseits zusätzlich an der Kufeneinheit montiert werden oder montiert sein. Somit kann die Kufeneinheit für die zumindest eine Leitungseinheit oder für zumindest einen Abschnitt der zumindest einen Leitungseinheit eine tragende Struktur, das heißt eine Tragstruktur bilden, was beispielsweise zu einer weiteren Erhöhung der Stabilität der konfigurierbaren Scharwerkzeugeinheit führt.

Es ist möglich, dass die Kufeneinheit als Furchenöffner zumindest eine erste Kufenwand und zumindest eine zweite Kufenwand umfasst, wobei die zumindest eine erste Kufenwand und die zumindest eine zweite Kufenwand unter Ausbildung eines Winkels zueinander und/oder im Wesentlichen keilförmig zueinander angeordnet sind, und/oder wobei zumindest ein Auslass zumindest einer Leitungseinheit zum Transport des landwirtschaftlichen Guts zumindest abschnittsweise zwischen der zumindest einen ersten Kufenwand und der zumindest einen zweiten Kufenwand angeordnet ist, vorzugsweise zumindest abschnittsweise von der zumindest einen ersten Kufenwand und der zumindest einen zweiten Kufenwand ummantelt ist. Vorzugsweise ist die zumindest eine erste Kufenwand und/oder die zumindest eine zweite Kufenwand im Wesentlichen flach und/oder im Wesentlichen plattenförmig ausgebildet.

Die zumindest eine erste Kufenwand und/oder die zumindest eine zweite Kufenwand kann in Bezug auf den Boden zumindest abschnittsweise eine im Wesentlichen ebene und/oder eine im Wesentlichen gewölbte Bearbeitungskontur aufweisen.

Gemäß einem weiteren Aspekt der vorliegenden Erfindung kann vorgesehen sein, dass in einer Projektion im Wesentlichen senkrecht zu der Bewegungsrichtung in Richtung des Bodens die Rolleneinheit einen resultierenden Rolleneinheit-Aufstandspunkt, zumindest eine Schneidscheibe der Schneidscheibeneinheit zumindest einen resultierenden Schneidscheibeneinheit-Aufstandspunkt und zumindest ein Auslass zumindest einen resultierenden Auslass-Projektionspunkt an dem Boden ausbilden oder definieren, wobei in einer Ansicht in der Bewegungsrichtung und somit vorzugsweise bei einem Blick in die Bewegungsrichtung der zumindest eine resultierende Schneidscheibeneinheit-Aufstandspunkt hinter dem resultierenden Rolleneinheit-Aufstandspunkt und vor dem zumindest einen resultierenden Auslass-Projektionspunkt angeordnet ist oder liegt, oder hinter dem resultierenden Rolleneinheit-Aufstandspunkt und hinter dem zumindest einen resultierenden Auslass-Projektionspunkt angeordnet ist oder liegt.

Der resultierende Rolleneinheit-Aufstandspunkt kann ein idealisierter geometrischer und/oder kinematischer Punkt oder Fläche auf dem Boden sein, auf welchen oder auf welche sich die Rolleneinheit reduzieren lässt und/oder mittels welchem oder welcher sich die Rolleneinheit hinsichtlich ihrer Anordnung an dem Boden beschreiben lässt. Es ist auch möglich, das der Rolleneinheit-Aufstandspunkt ein resultierender idealisierter Kraftübertragungspunkt oder eine resultierende idealisierte Kraftübertragungsfläche der Rolleneinheit darstellt.

Analog kann zumindest eine resultierender Schneidscheibeneinheit-Aufstandspunkt ein idealisierter geometrischer und/oder kinematischer Punkt oder eine idealisierte geometrische und/oder kinematische Fläche auf dem Boden sein, auf welchen oder auf welche sich zumindest eine Schneidscheibe der Schneidscheibeneinheit reduzieren lässt, und/oder mittels welchem oder mittels welcher sich die zumindest eine Schneidscheibe der Schneidscheibeneinheit hinsichtlich ihrer Anordnung an dem Boden beschreiben lässt.

Der zumindest eine Auslass-Projektionspunkt kann ein projizierter Flächenmittelpunkt oder ein projizierter resultierender Mittelpunkt des Querschnitts des zumindest einen Auslasses auf dem Boden sein.

Gemäß einem weiteren Gesichtspunkt der vorliegenden Erfindung kann vorgesehen sein, dass die Scharvorrichtung zumindest ein Führungselement zum Führen des landwirtschaftlichen Guts in die Furche umfasst, wobei das zumindest eine Führungselement zumindest abschnittsweise im Wesentlichen flach und/oder im Wesentlichen plattenförmig und/oder im Wesentlichen gewölbt ausgebildet ist, und dass das zumindest eine Führungselement an zumindest einem Auslass zumindest einer Leitungseinheit zum Transport des landwirtschaftlichen Guts ausgebildet ist oder an dem Werkzeugträger montiert ist.

Die vorliegende Erfindung betrifft nach einem zweiten allgemeinen Gesichtspunkt eine landwirtschaftliche Arbeitsmaschine, vorzugsweise mobile anhängbare landwirtschaftliche Arbeitsmaschine, zur Bearbeitung eines Bodens und/oder zur Verteilung eines landwirtschaftlichen Guts in einen Boden, mit zumindest einer ersten Scharvorrichtung wie hierin offenbart und mit zumindest einer zweiten Scharvorrichtung wie hierin offenbart, sowie mit einem Tragrahmen, an welchem die zumindest eine erste Scharvorrichtung und die zumindest eine zweite Scharvorrichtung zur Bewegung in einer Bewegungsrichtung und/oder höhenverstellbar montiert ist. Die Höhenverstellbarkeit kann beispielsweise mittels zumindest einer Aktuatoreinrichtung, beispielsweise mittels zumindest einem Linearaktuator in Form eines doppeltwirkenden Zylinders, realisiert sein.

Es ist möglich, dass die zumindest eine erste Scharvorrichtung und die zumindest eine zweite Scharvorrichtung in einem Strichabstand voneinander beabstandet angeordnet sind, wobei der Strichabstand in einem Bereich zwischen ungefähr 12,5 cm und ungefähr 25,0 cm liegt, vorzugsweise ungefähr 15,0 cm beträgt, und/oder wobei die zumindest eine erste Scharvorrichtung und/oder die zumindest eine zweite Scharvorrichtung über eine Schwingenanordnung oder über eine Lenkeranordnung einer Parallelogrammführung mit dem Tragrahmen verbunden ist, und/oder wobei in einer Ansicht in der Bewegungsrichtung die zumindest eine erste Scharvorrichtung und die zumindest eine zweite Scharvorrichtung an dem Tragrahmen zueinander versetzt angeordnet sind, vorzugsweise die Schneidscheibeneinheit der zumindest einen ersten Scharvorrichtung zu der Schneidscheibeneinheit der zumindest einen zweiten Scharvorrichtung versetzt angeordnet ist.

Der Strichabstand ist vorzugsweise der resultierende Abstand nebeneinanderliegender und/oder zueinander benachbarter Scharvorrichtungen, welcher sich beispielsweise auf den Abstand voneinander beabstandeter Pflanzenreihen auswirkt, welche sich durch Aussaat von Saatgut (zum Beispiel Mais) mittels der landwirtschaftlichen Arbeitsmaschine in den Boden und Wachstum ergeben.

Die zuvor beschriebenen Ausführungsbeispiele und Merkmale der vorliegenden Erfindung sind beliebig miteinander kombinierbar. Weitere oder andere Einzelheiten und vorteilhafte Wirkungen der vorliegenden Erfindung werden im Folgenden unter Bezugnahme auf die beigefügten Figuren näher erläutert.

Es zeigen:
- Fig. 1A: ein erstes Ausführungsbeispiel einer Scharvorrichtung gemäß der vorliegenden Erfindung in einer perspektivischen Ansicht;
- Fig. 1B: die Scharvorrichtung aus Figur 1A in einer weiteren perspektivischen Ansicht mit einer ausgeblendeten Schneidscheibe;
- Fig. 1C: die Scharvorrichtung aus Figur 1A in einer Seitenansicht (Ansicht X in Figur 1A) mit einer ausgeblendeten Schneidscheibe;
- Fig. 1D: einen vergrößert dargestellten Ausschnitt der Scharvorrichtung aus Figur 1C;
- Fig. 2: ein zweites Ausführungsbeispiel einer Scharvorrichtung gemäß der vorliegenden Erfindung in einer perspektivischen Ansicht mit einer ausgeblendeten Schneidscheibe;
- Fig. 3: einen vergrößert dargestellten Ausschnitt eines dritten Ausführungsbeispiels einer Scharvorrichtung gemäß der vorliegenden Erfindung in einer Seitenansicht mit einer ausgeblendeten Schneidscheibe;
- Fig. 4A: ein erstes Ausführungsbeispiel einer landwirtschaftlichen Arbeitsmaschine gemäß der vorliegenden Erfindung mit einer Mehrzahl an Scharvorrichtungen eines vierten Ausführungsbeispiels gemäß der vorliegenden Erfindung in einer perspektivischen Ansicht;
- Fig. 4B: einen vergrößert dargestellten Ausschnitt der landwirtschaftlichen Arbeitsmaschine aus Figur 2A in einer Seitenansicht (Ansicht Y in Figur 4A);
- Fig. 5A: ein zweites Ausführungsbeispiel einer Scharvorrichtung gemäß der vorliegenden Erfindung in einer Seitenansicht und in einem ersten Montagezustand;
- Fig. 5B: die Scharvorrichtung aus Figur 5A in einer Seitenansicht und in einem zweiten Montagezustand;
- Fig. 5C: die Scharvorrichtung aus Figur 5A in einer Seitenansicht und in einem dritten Montagezustand;
- Fig. 5D: die Scharvorrichtung aus Figur 5A in einer Seitenansicht und in einem vierten Montagezustand, wobei eine Schneidscheibe ausgeblendet ist;
- Fig. 5E: die Scharvorrichtung aus Figur 5D in einer Seitenansicht, wobei die Schneidscheibe eingeblendet ist;
- Fig. 5F: die Scharvorrichtung aus Figur 5E in einer perspektivischen Ansicht.

Gleiche oder funktional äquivalente Komponenten oder Elemente sind in den Figuren mit denselben Bezugszeichen gekennzeichnet. Zu deren Erläuterung wird teilweise auch auf die Beschreibung anderer Ausführungsbeispiele und/oder Figuren verwiesen, um Wiederholungen zu vermeiden.

Die folgende detaillierte Beschreibung der in den Figuren dargestellten Ausführungsbeispiele dient zur näheren Veranschaulichung oder Verdeutlichung und soll den Umfang der vorliegenden Erfindung in keiner Weise beschränken.

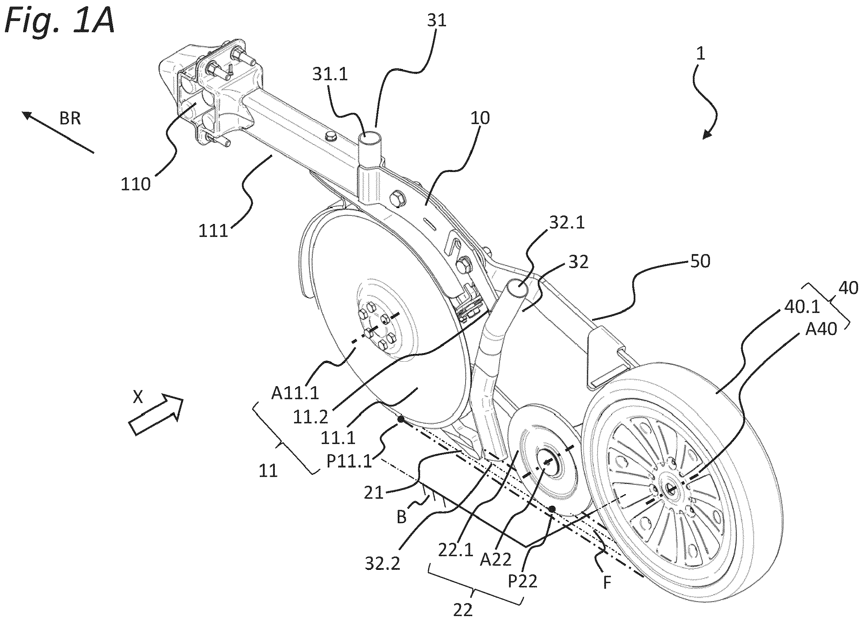

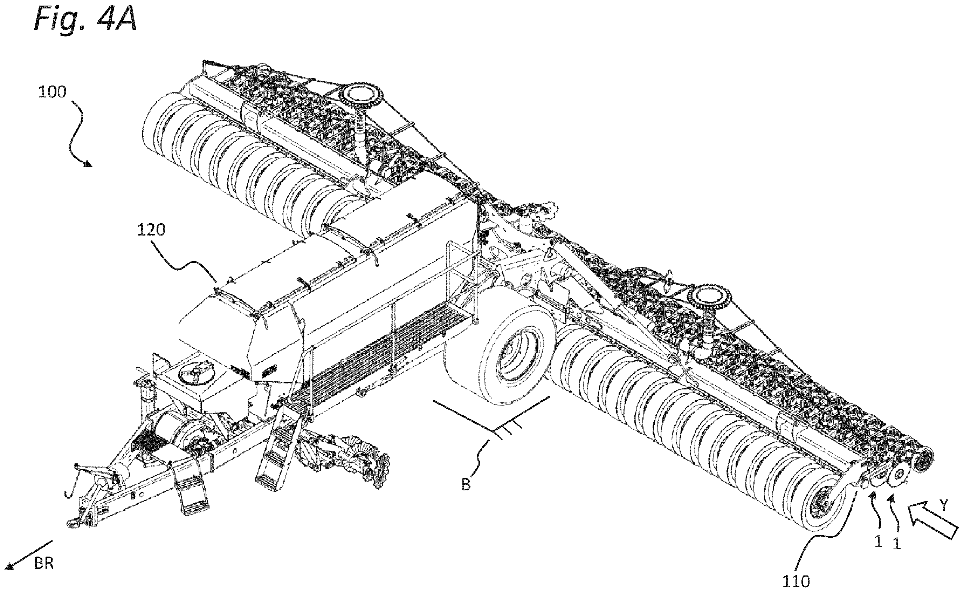

Figur 1A zeigt ein erstes Ausführungsbeispiel der Scharvorrichtung 1 gemäß der vorliegenden Erfindung in einer perspektivischen Ansicht. Die Scharvorrichtung 1 ist vorzugsweise eine Säscharvorrichtung 1 (kurz "Säschar") für eine mobile landwirtschaftliche Arbeitsmaschine 100 in Form einer Sämaschine (siehe hierzu insbesondere Figur 4A). Die Scharvorrichtung 1 ist zur Einbringung eines landwirtschaftlichen Guts in eine Furche F eines Bodens B entlang einer Bewegungsrichtung BR der Scharvorrichtung 1 konfiguriert. Das landwirtschaftliche Gut kann ein Saatgut, beispielsweise körnerförmiges Saatgut in Form von Maiskörnern, Rapskörnern oder Getreidekörnern, und/oder auch ein Düngemittel, beispielsweise körnerförmiges Düngemittel in Form von Mineraldüngerkörnern, sein. Die Furche F ist vorzugsweise eine Saatfurche, welche durch die Scharvorrichtung 1 im Betriebszustand erzeugt werden kann oder erzeugt wird, und in welcher das landwirtschaftliche Gut durch die Scharvorrichtung 1 eingebracht werden kann.

Die Bewegungsrichtung BR der Scharvorrichtung 1 stellt vorzugsweise diejenige Richtung der Bewegung der Scharvorrichtung 1 im Betriebszustand dar, in welcher die Scharvorrichtung 1 bestimmungsgemäß und/oder ordnungsgemäß funktioniert und vorzugsweise Anforderungen an die Funktionalität und/oder Sicherheit der Scharvorrichtung 1 erfüllt werden. Die Bewegungsrichtung BR ist vorzugsweise durch die landwirtschaftliche Arbeitsmaschine 100, an welcher die Scharvorrichtung 1 montiert ist, vorgegeben. Im Falle einer mobilen landwirtschaftlichen Arbeitsmaschine 100, beispielsweise einer selbstfahrenden oder einer anhängbaren landwirtschaftlichen Arbeitsmaschine 100, ist die Bewegungsrichtung BR der Scharvorrichtung 1 in der Regel die Fahrtrichtung oder die Zugrichtung der landwirtschaftlichen Arbeitsmaschine 100. Ein Ausführungsbeispiel einer landwirtschaftlichen Arbeitsmaschine 100 gemäß der vorliegenden Erfindung wird anhand der weiteren Figur 4A nachfolgend näher beschrieben.

Die Scharvorrichtung 1 umfasst mit dem Scharträger 10 eine Tragstruktur oder eine tragende Struktur der Scharvorrichtung 1, welche an einen Tragrahmen 110 der landwirtschaftlichen Arbeitsmaschine 100 (siehe hierzu insbesondere Figur 4A) montiert werden kann und somit zur Montage an einen Tragrahmen 110 der landwirtschaftlichen Arbeitsmaschine 100 konfiguriert ist. Bei dem vorliegenden Ausführungsbeispiel der Scharvorrichtung 1 umfasst der Scharträger 10 hierzu entsprechende Montageelemente und/oder Montageabschnitte in Form zumindest einer Durchgangsbohrung und/oder zumindest eines Flansches, was in den Figuren aus Gründen der Übersichtlichkeit nicht gekennzeichnet ist. Zur Verbindung der Scharvorrichtung 1 mit dem Tragrahmen 110 ist bei dem gezeigten Ausführungsbeispiel ein erster Tragarm 111 vorgesehen.

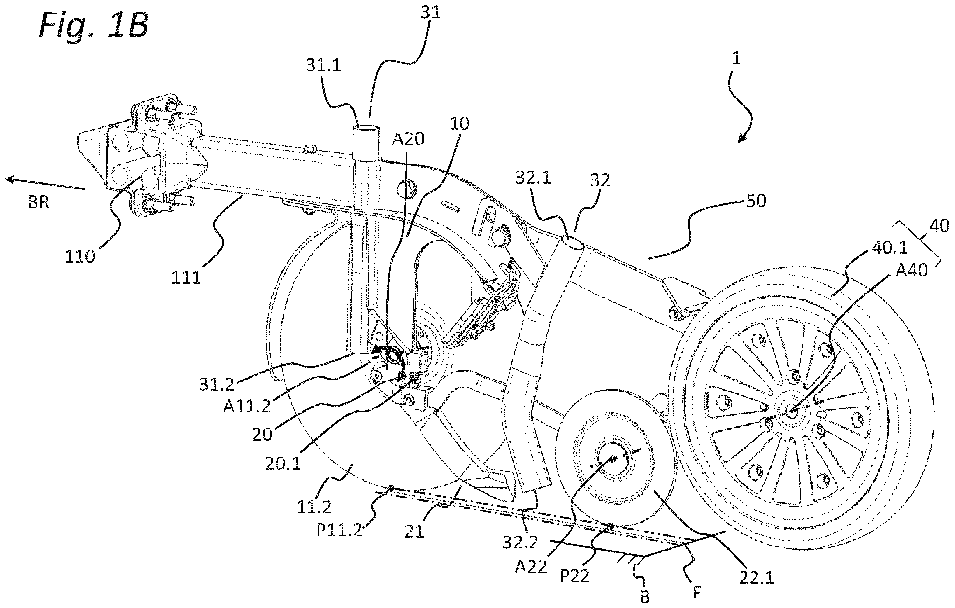

An dem Scharträger 10 ist eine Schneidscheibeneinheit 11 zur Erzeugung der Furche F angeordnet. Die Schneidscheibeneinheit 11 ist bei dem vorliegenden Ausführungsbeispiel als Doppelschneidscheibeneinheit 11 ausgebildet und umfasst eine erste Schneidscheibe 11.1 und eine zweite Schneidscheibe 11.2. Sowohl die erste Schneidscheibe 11.1 als auch die zweite Schneidscheibe 11.2 ist jeweils um eine Schneidscheibenachse A11.1, A11.2 (siehe hierzu auch Figur 1B) drehbar gelagert, beispielsweise mittels einer Nabe und/oder mittels einem Lagerelement (beispielsweise Wälzlagerelement oder Gleitlagerelement), um ihre bestimmungsgemäße Funktion im Zuge der Erzeugung der Furche F realisieren zu können. Bei einem alternativen Ausführungsbeispiel der Scharvorrichtung 1 kann die Schneidscheibeneinheit 11 nur eine einzige Schneidscheibe 11.1 umfassen.

Die erste Schneidscheibe 11.1 und die zweite Schneidscheibe 11.2 sind unter Ausbildung eines Winkels, vorzugsweise eines spitzen Winkels, zueinander schräg und somit nicht parallel angeordnet. Mit anderen Worten bilden die erste Schneidscheibe 11.1 und die zweite Schneidscheibe 11.2 in einer Ansicht in der Bewegungsrichtung BR und/oder in einer Ansicht senkrecht zu der Bewegungsrichtung BR eine V-förmige Anordnung und/oder weisen zumindest abschnittsweise eine V-förmige Kontur auf. Die Schneidscheibeneinheit 11 weitet sich vorzugsweise zumindest entgegen der Bewegungsrichtung BR der Scharvorrichtung 1 allmählich oder stetig auf. Damit lässt sich grundsätzlich die Funktion der Erzeugung der Furche F realisieren.

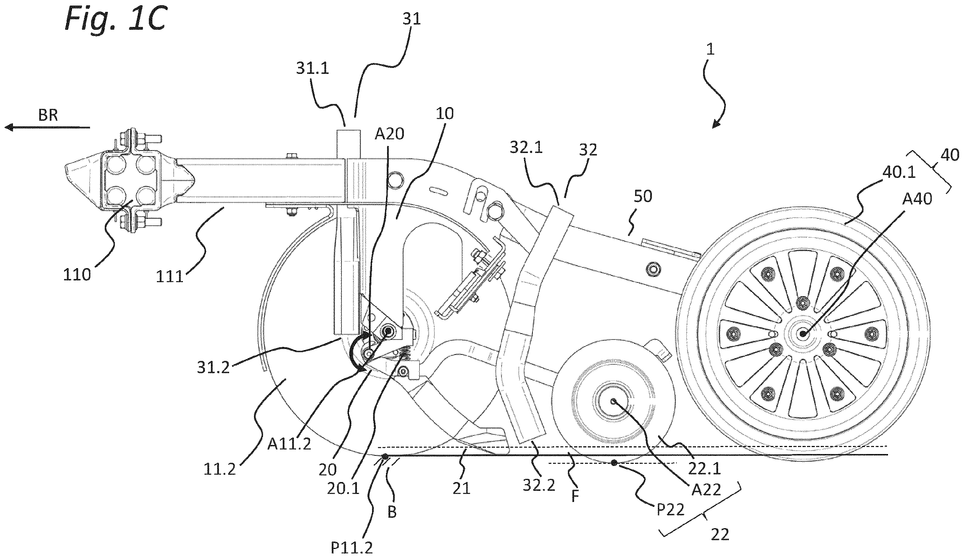

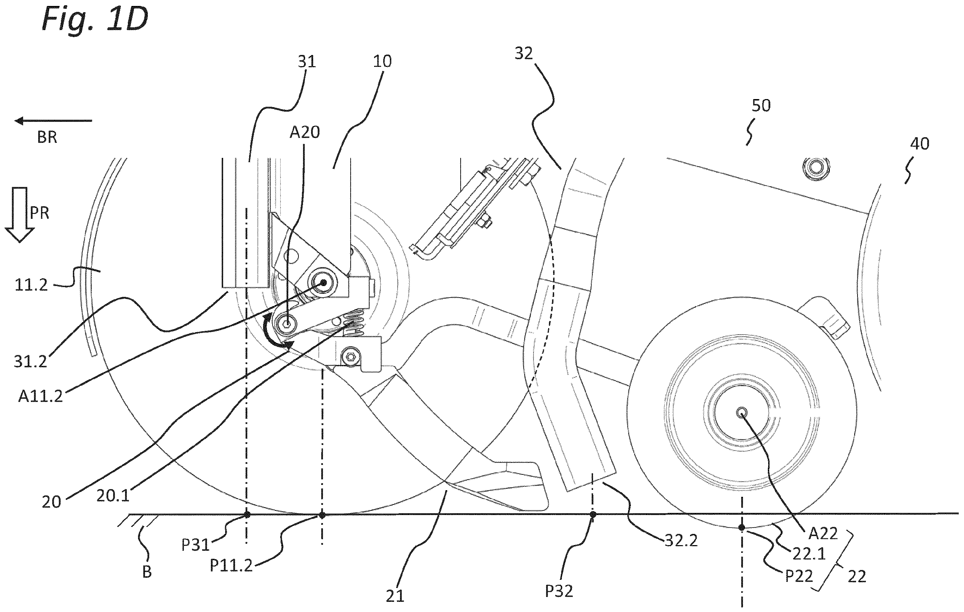

Die Schneidscheiben 11.1 und 11.2 sind im Wesentlichen flach und/oder tellerförmig ausgebildet und durch eine im Wesentlichen kreisrunde Außenkontur gekennzeichnet, was sich beispielsweise graphisch anschaulich aus den Figuren 1C und 1D ergibt. Die Lage, das heißt die Position und/oder die Ausrichtung einer jeweiligen Schneidscheibe 11.1, 11.2 kann durch die jeweilige Schneidscheibenachse A11.1 und A11.2 (siehe hierzu auch Figur 1B) angegeben und beschrieben werden. In Figur 1A ist die Schneidscheibenachse A11.1, welche der ersten Schneidscheibe 11.1 zugeordnet ist und um welche die erste Schneidscheibe 11.1 drehbar gelagert ist, entsprechend dargestellt und gekennzeichnet. Ferner kann die erste Schneidscheibe 11.1 über einen resultierenden Schneidscheiben-Aufstandspunkt P11.1 und seine Lage, das heißt seine Position am Boden B und insbesondere in der Furche F beschrieben werden. Entsprechende Eigenschaften lassen sich auch für die zweite Schneidscheibe 11.2 angegeben, was beispielsweise ferner aus der Darstellung in Figur 1B hervorgeht und was nachfolgend zur Erläuterung des Ausführungsbeispiels näher beschrieben wird.

In Figur 1A ist weiterhin eine Rolleneinheit 22 mit einer Rolle 22.1 und einer dazugehörigen Rollenachse A22, um welche die Rolle 22.1 drehbar gelagert ist, erkennbar. Ebenso kann auch für die Rolle 22.1 ein resultierender Rolleneinheit-Aufstandspunkt P22 definiert oder festgelegt werden. Die Rolleneinheit 22 ist ein möglicher Bestandteil der Scharvorrichtung 1. Die Rolleneinheit 22 ist zum Fangen und/oder zum Abbremsen des landwirtschaftlichen Guts im Bereich der Furche B und/oder zum Andrücken des landwirtschaftlichen Guts im Bereich der Furche B konfiguriert. Die Rolle 22.1 ist durch eine im Wesentlichen kreisrunde Außenkontur gekennzeichnet, was sich beispielsweise graphisch anschaulich aus den Figuren 1C und 1D ergibt. Die Rolle 22.1 kann zumindest teilweise aus einem formstabilen Werkstoff und/oder zumindest teilweise aus einem elastischen Werkstoff, beispielsweise auf Kunststoffbasis, hergestellt sein.

Im Hinblick auf einen Schneidscheiben-Aufstandspunkt P11.1, P11.2 und einen Rolleneinheit-Aufstandspunkt P22 ist anzumerken, dass es sich hierbei vorzugsweise um einen idealisierten und/oder zentralisierten Kontaktpunkt oder Kontaktfläche der jeweiligen Komponente mit dem Boden B handelt, mittels welchem oder mittels welcher eine Beziehung zu dem Boden B und/oder zueinander in Bezug auf eine geometrische Lage beschrieben werden kann. Selbstverständlich haben sowohl die Schneidscheiben 11.1 und 11.2 der Schneidscheibeneinheit 11 als auch die Rolle 22.1 der Rolleneinheit 22 einen eher unregelmäßigen flächigen Kontakt zum Boden B, insbesondere im Betriebszustand der Scharvorrichtung 1.

Aus Figur 1A geht ferner eine Nachlaufrolleneinheit 40 mit einer Nachlaufrolle 40.1 und einer Nachlaufrollenachse A40 hervor. Die Nachlaufrolle 40.1 ist analog der Rolle 22.1 und der Rollenachse A22 um die Nachlaufrollenachse A40 drehbar gelagert. Die Lagerung kann auch hier beispielsweise mittels einer Nabe und/oder mittels einem Lagerelement (beispielsweise Wälzlagerelement oder Gleitlagerelement) um die Nachlaufrollenachse A40 realisiert werden. Die Nachlaufrolleneinheit 40 kann zur Führung der Scharvorrichtung 1 in der Furche F und/oder zum Andrücken des Bodens B in der Furche F und/oder zum Schließen der Furche F mit dem Boden B konfiguriert sein. Je nach Funktionalität kann die Nachlaufrolle 40.1 entsprechend profiliert sein. Vorzugsweise weist auch die Nachlaufrolle 40.1 eine im Wesentlichen kreisrunde Außenkontur auf, was sich beispielsweise graphisch anschaulich aus den Figuren 1C und 1D ergibt.

Analog den Schneidscheiben 11.1 und 11.2 und/oder der Rolle 22.1 kann auch für die Nachlaufrolle 40.1 ein resultierender Nachlaufrollen-Aufstandspunkt definiert oder festgelegt werden, welcher allerdings in den Figuren aus Gründen der Übersichtlichkeit nicht gekennzeichnet ist.

Die Nachlaufrolleneinheit 40 ist vorzugsweise mittels einer Schwinge 50 am Scharträger 10 befestigt, vorzugsweise hinsichtlich der Lage und somit hinsichtlich der Position und/oder der Ausrichtung zu dem Scharträger 10 einstellbar befestigt. Die Befestigung kann beispielsweise mittels zumindest einer Schraubverbindung realisiert werden. Dadurch wird eine Höhenverstellbarkeit der Nachlaufrolleneinheit 40 gewährleistet.

Zudem erkennt man in der Darstellung in Figur 1A, dass die Scharvorrichtung 1 eine erste Leitungseinheit 31 mit einem Einlass 31.1 und eine zweite Leitungseinheit 32 mit einem Einlass 32.1 aufweist. Ferner ist auch jeweils ein Auslass 31.2, 32.2 der Leitungseinheiten 31, 32 vorhanden, wobei in Figur 1A der Auslass 32.2 sichtbar ist. Die Leitungseinheiten 31, 32 sind jeweils zumindest abschnittsweise rohrförmig ausgebildet und/oder durch einen im Wesentlichen kreisrunden Querschnitt gekennzeichnet. Die erste Leitungseinheit 31 dient zum Transport des landwirtschaftlichen Guts in Form von beispielsweise Düngemittel und die zweite Leitungseinheit 32 dient zum Transport des landwirtschaftlichen Guts in Form von beispielsweise körnerförmigem Saatgut. Hierzu ist beispielsweise jeweils ein flexibler Schlauch auf den Einlass 31.1 und 32.1 gesteckt und/oder montiert, in welchem das jeweilige landwirtschaftliche Gut, beispielsweise mittels einer Dosiervorrichtung und/oder mittels Pressluft, zugeführt wird. Sowohl der jeweilige flexible Schlauch als auch die Dosiervorrichtung sind in den Figuren aus Gründen der Übersichtlichkeit nicht dargestellt.

In einem Betriebszustand der Scharvorrichtung 1 ist es möglich, nur die erste Leitungseinheit 31 oder nur die zweite Leitungseinheit 32 mit dem landwirtschaftlichen Gut zu versorgen. In einem weiteren oder alternativen Betriebszustand der Scharvorrichtung 1 ist es möglich, beide Leitungseinheiten 31 und 32 gleichzeitig mit dem landwirtschaftlichen Gut zu versorgen.

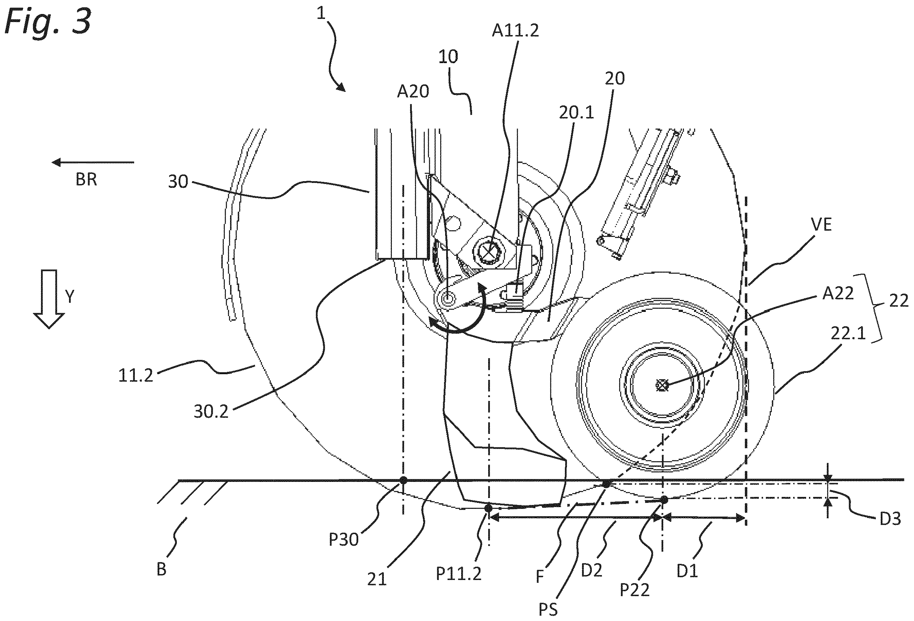

Bei einem alternativen Ausführungsbeispiel der Scharvorrichtung 1 ist es möglich, dass die Scharvorrichtung 1 eine einzige Leitungseinheit 30 zum Transport des landwirtschaftlichen Guts umfasst (siehe hierzu Figur 3).

Zur Verdeutlichung des Kerns der vorliegenden Erfindung wird im Folgenden in Figur 1B die Scharvorrichtung 1 aus Figur 1A in einer weiteren perspektivischen Ansicht mit der ausgeblendeten Schneidscheibe 11.1 dargestellt und näher beschrieben.

Erfindungsgemäß umfasst die Scharvorrichtung 1 zur Bildung einer konfigurierbaren und/oder variierbaren Scharwerkzeugeinheit 20, 21, 22 einen Werkzeugträger 20. Der Werkzeugträger 20 ist zumindest zur Montage einer Kufeneinheit 21 der Scharvorrichtung 1 zur Erzeugung der Furche F, vorzugsweise zur verbesserten Erzeugung der Furche F, und/oder zur Räumung der Furche F, konfiguriert. Zusätzlich oder alternativ ist der Werkzeugträger 20 zur Montage der Rolleneinheit 22 der Scharvorrichtung 1 zum Fangen und/oder Abbremsen des landwirtschaftlichen Guts im Bereich der Furche B und/oder zum Andrücken des landwirtschaftlichen Guts im Bereich der Furche B konfiguriert.

Die Scharvorrichtung 1 umfasst mit dem Werkzeugträger 20 eine Tragstruktur oder eine tragende Struktur der Scharvorrichtung 1, welche vorzugsweise als separates Einzelteil ausgebildet ist. Der Werkzeugträger 20 ist demnach als gemeinsamer Träger konfiguriert, die Kufeneinheit 21 und/oder die Rolleneinheit 22 aufzunehmen. Die Kufeneinheit 21 kann zumindest eine Kufe umfassen, welche zumindest abschnittsweise durch eine im Wesentlichen ebene und/oder eine im Wesentlichen gewölbte Außenkontur gekennzeichnet sind. Die Kufeneinheit 21 kann einteilig oder mehrteilig ausgebildet sein. Bei dem vorliegenden Ausführungsbeispiel wird die Kufeneinheit 21 durch einen massiven Kufenarm mit einem keilförmigen Endabschnitt oder Bodenbearbeitungsabschnitt gebildet.

Der Werkzeugträger 20 kann vorzugsweise zumindest abschnittsweise schwingenförmig und somit wie eine Schwinge, und/oder lenkerförmig und somit wie ein Lenker ausgebildet sein. Es ist zusätzlich oder alternativ möglich, dass der Werkzeugträger 20 zumindest abschnittsweise gabelförmig ausgebildet ist, wobei an freien Enden oder Endabschnitten zweier Gabelzinken beispielsweise die Rolleneinheit 22 angeordnet und/oder drehbar gelagert ist.

Mit anderen Worten dient der Werkzeugträger 20 als separate und/oder tragende Montageplattform für die Kufeneinheit 21 und/oder für die Rolleneinheit 22. Der Werkzeugträger 20 ist ferner vorzugsweise zur autarken und/oder zumindest zur von dem Scharträger 10 unabhängigen Montage der Kufeneinheit 21 und/oder der Rolleneinheit 22 an den Werkzeugträger 20 konfiguriert. Somit kann diese eigenständige bauliche Einheit beispielsweise im Zuge der Montage der Scharvorrichtung 1 komplett vormontiert werden. Damit einhergehend ist beispielsweise eine Flexibilität in der Konfiguration der erfindungsgemäßen Scharvorrichtung 1. Mit anderen Worten lässt sich die Scharvorrichtung 1 an entsprechende Bodenbedingungen und/oder hinsichtlich des in den Boden B einzubringenden landwirtschaftlichen Guts anpassen.

Die Scharvorrichtung 1 kann beispielsweise auch ohne den Werkzeugträger 20 betrieben werden. Vorzugsweise kann der Werkzeugträger 20 beispielsweise mit der Rolleneinheit 22 und ohne die Kufeneinheit 21, mit der Kufeneinheit 21 und ohne die Rolleneinheit 22, oder mit der Kufeneinheit 21 und der Rolleneinheit 22 bestückt werden. Die Funktionalität der Scharvorrichtung 1 in Bezug auf eine verbesserte Erzeugung der Furche F und/oder des Fangens und/oder Abbremsens von landwirtschaftlichem Gut im Bereich der Furche F kann somit durch den Werkzeugträger 20 als eine eigenständige bauliche Einheit der Scharvorrichtung 1 realisiert werden.

Darüber hinaus ist der Werkzeugträger 20 zur Montage an dem Scharträger 10 und/oder zur Montage an den Tragrahmen 110 konfiguriert und vorzugsweise an dem Scharträger 10 montiert.

Vorzugsweise ist der Werkzeugträger 20 zur drehbaren und/oder translatorischen Lagerung an dem Scharträger 10 und/oder an dem Tragrahmen 110 konfiguriert. Bei dem vorliegenden Ausführungsbeispiel ist der Werkzeugträger 20 an dem Scharträger 10 drehbar gelagert, was in Figur 1B mittels des gekrümmten Doppelpfeils gekennzeichnet ist. Die drehbare Lagerung oder genauer gesagt schwenkbare Lagerung kann beispielsweise mittels einer Werkzeugträgerachse A20, welche beispielsweise einen Bolzen als Achsteil umfasst, realisiert werden. Die Werkzeugträgerachse A20 und somit der Bolzen ist vorzugsweise an dem Scharträger 10 befestigt und dient zur drehbaren Lagerung des Werkzeugträgers 20.

Ferner ist der Werkzeugträger 20 der Scharvorrichtung 1 zur federnden Lagerung an dem Scharträger 10 und/oder an dem Tragrahmen 110 konfiguriert. Zur Realisierung der federnden Lagerung ist zwischen einem entsprechenden Abschnitt des Scharträgers 10 und einem entsprechenden Abschnitt des Werkzeugträgers 20 ein Federelement 20.1 in Form eines Druckfederelements 20.1 angeordnet. Das Druckfederelement 20.1 ist vorzugsweise als Schraubenfeder ausgebildet oder umfasst zumindest eine Schraubenfeder ausreichender Steifigkeit. Die federnde Lagerung kann bei einem alternativen Ausführungsbeispiel der Scharvorrichtung 1 auch durch ein Zugfederelement realisiert werden. Das Federelement 20.1 kann alternativ hinsichtlich Steifigkeit auch einstellbar sein.

Alternativ kann der Werkzeugträger 20 auch mittels einer Parallelogrammführung zur Lagerung an dem Scharträger 10 und/oder an dem Tragrahmen 110 konfiguriert sein. Die Parallelogrammführung kann beispielsweise mit zumindest zwei Lenkern oder mit zumindest zwei Schwingen, welche jeweils drehbar an dem Scharträger 10 und an dem Werkzeugträger 20 gelagert sind, realisiert werden.

Figur 1C zeigt die Scharvorrichtung 1 aus Figur 1A in einer Seitenansicht (Ansicht X in Figur 1A) mit der ausgeblendeten Schneidscheibe 11.1 In Figur 1C erkennt man ferner die Auslässe 31.1 und 31.2 der Leitungseinheiten 31 und 32 und deren Position und Ausrichtung. Die Auslässe 31.1 und 32.1 sind zur Zuführung des landwirtschaftlichen Guts wie oben beschrieben in die Furche F, das heißt in den Bereich der Furche F konfiguriert. Die Leitungseinheiten 31, 32 sind vorzugsweise an dem Scharträger 10 montiert. Gut erkennbar ist, dass die Auslässe 31.2 und 32.2 einen zu dem Boden B, insbesondere zu der Furche F, unterschiedlichen resultierenden Abstand haben. Bei einem alternativen Ausführungsbeispiel der Scharvorrichtung 1 können die Leitungseinheiten 31 und/oder 32 auch an dem Werkzeugträger 20 montiert sein. Hierzu umfasst der Werkzeugträger 20 einen jeweiligen individuellen und/oder separaten Werkzeugmontageabschnitt. Die Scharwerkzeugeinheit 20, 21, 22 der Scharvorrichtung 1 gemäß der vorliegenden Erfindung ist somit eine individuell konfigurierbare Scharwerkzeugeinheit 20, 21, 22, 31, 32, wobei bei einer montierten Konfiguration der Werkzeugträger 20 eine Kufeneinheit 21, eine Rolleneinheit 22 und zumindest eine Leitungseinheit 31, 32 umfasst. Die jeweilige Einheit 21, 22, 31, 32 ist einem jeweiligen und/oder individuellen Werkzeugmontageabschnitt des Werkzeugträgers 20 zugeordnet und/oder daran direkt und/oder unmittelbar montiert.

In einer Ansicht entgegen der Bewegungsrichtung BR ist der erste Auslass 31.2 der ersten Leitungseinheit 31 vor der Kufeneinheit 21, und vorzugsweise vor den Schneidscheibenachsen A11.1 und A11.2, und der zweite Auslass 32.2 der zweiten Leitungseinheit 32 zwischen der Kufeneinheit 21 und der Rolleneinheit 22 angeordnet.

Wie sich aus der Darstellung in Figur 1C ferner ergibt, ist in einer Ansicht senkrecht zu der Bewegungsrichtung BR die Rollenachse A22 außerhalb der Außenkontur der zweiten Schneidscheibe 11.2 und mithin auch der ersten Schneidscheibe 11.1 angeordnet. Vorzugsweise kann in einer Ansicht senkrecht zu der Bewegungsrichtung BR die Rollenachse A22 außerhalb eines definierten und somit einstellbaren Bereichs außerhalb der Außenkontur der jeweiligen Schneidscheibe 11.1 und/oder 11.2 angeordnet sein.

Bei einem alternativen Ausführungsbeispiel ist es möglich, dass in einer Ansicht senkrecht zu der Bewegungsrichtung BR die Rollenachse A22 innerhalb der Außenkontur zumindest einer Schneidscheibe 11.1, 11.2, vorzugsweise innerhalb eines definierten Bereichs innerhalb der Außenkontur, angeordnet ist (siehe hierzu den in Figur 3 gezeigten, vergrößert dargestellten Ausschnitt eines dritten Ausführungsbeispiels der Scharvorrichtung 1 gemäß der vorliegenden Erfindung).

Ein in der Ansicht in Figur 1C resultierender Durchmesser der im Wesentlichen kreisförmigen Rolle 22.1 ist vorzugsweise zumindest halb so groß wie ein resultierender Durchesser der im Wesentlichen kreisförmigen Schneidscheibe 11.2.

Figur 1D zeigt einen vergrößert dargestellten Ausschnitt der Scharvorrichtung aus Figur 1C zur näheren Verdeutlichung. Gut erkennbar ist die Montage der Rolle 22.1 über einen entsprechenden Arm an dem Werkzeugträger 20. Der Arm ist aus Gründen der Übersichtlichkeit in den Figuren nicht gekennzeichnet.

Wie sich aus Figur 1C ferner anschaulich ergibt, bilden in einer Projektion PR senkrecht zu der Bewegungsrichtung BR in Richtung des Bodens B die Rolleneinheit einen resultierenden Rolleneinheit-Aufstandspunkt P22, die Schneidscheibe 11.1 der Schneidscheibeneinheit 11 einen resultierenden Schneidscheibeneinheit-Aufstandspunkt P11.2, der erste Auslass 31.2 einen resultierenden Auslass-Projektionspunkt P31 und der zweite Auslass 32.2 einen resultierenden Projektionspunkt P32 an dem Boden B aus. In einer Ansicht in der Bewegungsrichtung BR ist der resultierende Schneidscheibeneinheit-Aufstandspunkt P11.2 hinter dem resultierenden Rolleneinheit-Aufstandspunkt P22 und hinter dem resultierenden Auslass-Projektionspunkt P32, aber vor dem resultierenden Auslass-Projektionspunkt P31 angeordnet oder liegend.

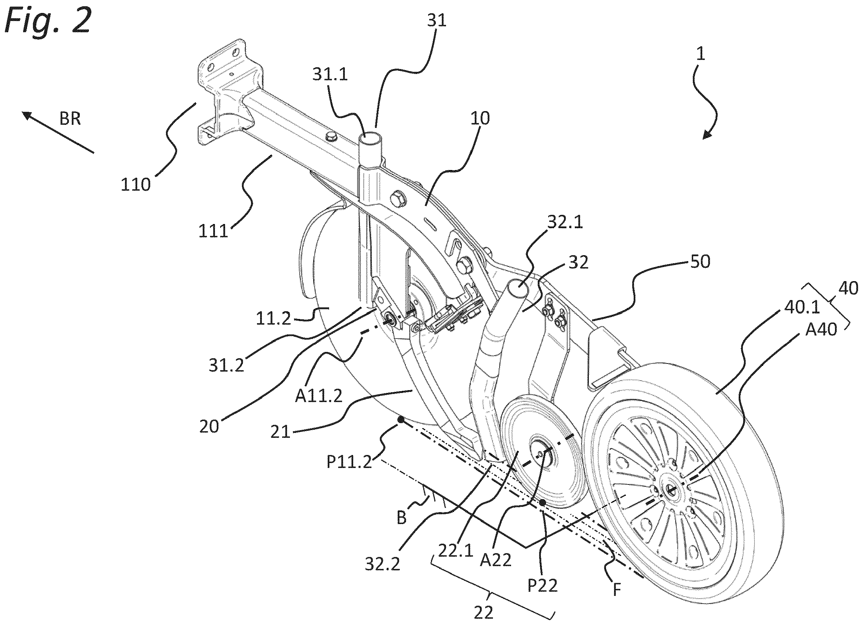

Figur 2 zeigt ein zweites Ausführungsbeispiel einer Scharvorrichtung 1 gemäß der vorliegenden Erfindung in einer perspektivischen Ansicht mit einer ausgeblendeten Schneidscheibe. Die Scharvorrichtung 1 in Figur 2 ist zu der Scharvorrichtung 1 in den Figuren 1A bis 1D in weiten Teilen, das heißt in Bezug auf bestimme Einheiten, beispielsweise die Schneidscheibeneinheit 11, die Kufeneinheit 21 und/oder die Nachlaufrolleneinheit 40, identisch oder zumindest ähnlich ausgebildet und/oder konfiguriert.

Bei dem Ausführungsbeispiel in Figur 2 ist an dem Werkzeugträger 20 nur die Kufeneinheit 21 fest, das heißt starr und somit unbeweglich montiert. Die Rolleneinheit 22 und somit die Rolle 22.1 ist über einen Arm an der Schwinge 50 fest, das heißt starr und somit unbeweglich montiert. Die Montage ist mittels Schraubverbindungen in Langlöchern realisiert, wodurch die Rolleneinheit 22 somit zu dem Boden B individuell höhenverstellbar ist. Aus Gründen der Übersichtlichkeit sind der Arm der Rolleneinheit 22 und die Montagemittel der Rolleneinheit 22 an der Schwinge 50 nicht gekennzeichnet.

Figur 3 zeigt einen vergrößert dargestellten Ausschnitt eines dritten Ausführungsbeispiels einer Scharvorrichtung 1 gemäß der vorliegenden Erfindung in einer Seitenansicht mit einer ausgeblendeten Schneidscheibe 11.1. die in Figur 3 gezeigte Scharvorrichtung 1 weist nur eine einzige Leitungseinheit 30 zum Transport landwirtschaftlichen Guts mit einem Einlass (nicht sichtbar) und mit einem Auslass 30.2 auf.

In einer Ansicht entgegen der Bewegungsrichtung BR ist der Auslass 30.2 vor der Kufeneinheit 21 und vor der Rolleneinheit 22 angeordnet, jedoch innerhalb oder im Bereich zwischen einer ersten Schneidscheibe 11.1 (nicht sichtbar) und der zweiten Schneidscheibe 11.2. Bei einem alternativen Ausführungsbeispiel der erfindungsgemäßen Scharvorrichtung 1 kann in einer Ansicht entgegen der Bewegungsrichtung BR der Auslass 30.2 zwischen der Kufeneinheit 21 und der Rolleneinheit 22 angeordnet sein. Dadurch kann beispielsweise eine weiter optimierte Einbringung des landwirtschaftlichen Guts in die Furche F realisiert werden, nachdem die erzeugte Furche F weiter verbessert ist.

In einer Ansicht in der Bewegungsrichtung BR ist die Kufeneinheit 21 und die Rolleneinheit 22 zumindest abschnittsweise zwischen der ersten Schneidscheibe 11.1 und der zweiten Schneidscheibe 11.2 angeordnet.

Die Rolleneinheit 22 mit der Rolle 22.1 lässt sich, wie bereits oben anhand weiterer Ausführungsbeispiele beschrieben, in Bezug auf ihre Lage durch die Rollenachse A22, um welche die Rolle 22.1 drehbar gelagert ist, beschreiben, sowie auch durch die Lage eines resultierenden Rolleneinheit-Aufstandspunkts P22 auf dem Boden B. Analog lässt sich in einer Projektion PR senkrecht zu der Bewegungsrichtung BR in Richtung des Bodens B für den Auslass 30.2 der Leitungseinheit 30 ein resultierender Auslass-Projektionspunkt P30 auf dem Boden B definieren oder festlegen. Mit anderen Worten bildet sich für den Auslass 30.2 in einer Projektion PR senkrecht zu der Bewegungsrichtung BR an dem Boden B ein resultierender Auslass-Projektionspunkt P30 aus.

In Bezug auf die zweite Schneidscheibe 11.2 lässt sich an dem Boden B, vorzugsweise im Bereich der Furche B, ein resultierender Schneidscheibeneinheit-Aufstandspunkt P11.2 definieren oder festlegen.

Wie sich aus Figur 3 ergibt, liegt in einer Ansicht in der Bewegungsrichtung BR, also von rechts nach links in Figur 3, der Schneidscheibeneinheit-Aufstandspunkt P11.2 hinter dem Rolleneinheit-Aufstandspunkt P22 und vor dem Auslass-Projektionspunkt P30. Bei einem alternativen Ausführungsbeispiel der Scharvorrichtung 1 kann in einer Ansicht in der Bewegungsrichtung BR der Schneidscheibeneinheit-Aufstandspunkt P11.2 hinter dem Rolleneinheit-Aufstandspunkt P22 und hinter dem Auslass-Projektionspunkt P30 liegen.

Mit entsprechenden Leitungseinheiten 30, 31, 32 und jeweilig angeordneten Auslässen 30.2, 31.2, 32.2 (siehe hierzu die weiteren Ausführungsbeispiele) kann - in Bewegungsrichtung BR gesehen - somit beispielsweise Düngemittel hinter der Kufeneinheit 21 und Saatgut vor der Kufeneinheit 21 und hinter der Rolleneinheit 22 in die Furche F eingebracht werden. Alternativ kann sowohl Düngemittel als auch Saatgut vor der Kufeneinheit 21 und vor der Rolleneinheit 22 in die Furche F eingebracht werden. Ebenso ist es alternativ möglich, sowohl Düngemittel als auch Saatgut zwischen der Kufeneinheit 21 und der Rolleneinheit 22 in die Furche F einzubringen. Der jeweilige zumindest eine Auslass 30.2, 31.2, 32.2 kann vorzugsweise an einer jeweiligen Position des Werkzeugträgers 20 montiert sein.

Die Rolleneinheit 22 in Figur 3 kann über den Werkzeugträger 20 eine Lage einnehmen, dass der Rolleneinheit-Aufstandspunkt P22 idealisiert eine vertikale Ebene VE schneidet oder sich in der Bewegungsrichtung BR gesehen vor der vertikalen Ebene VE befindet oder alternativ sich hinter der vertikalen Ebene VE befindet, wobei die vertikale Ebene VE in der Bewegungsrichtung BR gesehen vor dem Auslass 30.2 angeordnet ist, im Wesentlichen senkrecht zu der Bewegungsrichtung BR der Scharvorrichtung 1 ausgerichtet ist und im Wesentlichen tangential zu zumindest einer Schneidscheibe 11.1 der Schneidscheibeneinheit 11 angeordnet ist (siehe hierzu auch Figur 1D im Zuge der Darstellung des ersten Ausführungsbeispiels der Scharvorrichtung 1).

Mit Blick auf die Scharvorrichtung 1 in Figur 3 ist es möglich, dass in einer Ansicht in der Bewegungsrichtung BR ein Abstand D1 des Rolleneinheit-Aufstandspunkts P22, welcher sich hinter der vertikalen Ebene VE befindet, zu der vertikalen Ebene VE mindestens 10% oder mindestens 20% oder mindestens 25% eines Durchmessers der Rolle 22.1 beträgt oder dass ein Abstand D1 des Rolleneinheit-Aufstandspunkts P22, welcher sich vor der vertikalen Ebene VE befindet, maximal 5% oder maximal 10% des Durchmessers der Rolle 22.1 beträgt.

Ferner ist es möglich, dass zumindest ein Auslass 30.2 zumindest einer Leitungseinheit 30 in einer Ansicht in der Bewegungsrichtung BR sich vor oder hinter oder im Bereich zumindest einer Schneidscheibenachse A11.1, A11.2 zumindest einer Schneidscheibe 11.1, 11.2 der Schneidscheibeneinheit 11 befindet.

Die Rolle 22.1 kann durch eine im Wesentlichen kreisringförmige Außenkontur gekennzeichnet sein und einen Durchmesser aufweisen, welcher maximal 75% oder maximal 60% oder maximal 50% oder maximal 40% eines Durchmessers zumindest einer Schneidscheibe 11.1, 11.2 der Schneidscheibeneinheit 11 beträgt.

Es ist möglich, dass der resultierende Rolleneinheit-Aufstandspunkt P22 und zumindest ein resultierender Schneidscheibeneinheit-Aufstandspunkt P11.1, P11.2 in der Furche B auf einer im Wesentlichen gleichen Tiefe liegen oder der resultierende Rolleneinheit-Aufstandspunkt P22 auf einer geringeren Tiefe liegt als zumindest ein resultierender Schneidscheibeneinheit-Aufstandspunkt P11.1, P11.2. Beispielsweise kann in einer Ansicht senkrecht zu der Bewegungsrichtung BR und in Richtung der Furche F ein Abstand zwischen dem resultierenden Rolleneinheit-Aufstandspunkt P22 und zumindest einem resultierenden Schneidscheibeneinheit-Aufstandspunkt P11.1, P11.2 in einem Bereich von 0,0 cm bis mindestens ungefähr 2 cm liegen. Dieser Abstand ist aus Gründen der Übersichtlichkeit in Figur 3 nicht dargestellt.

Ferner ist es möglich, dass in einer Ansicht in der Bewegungsrichtung BR ein Abstand D2 zwischen zumindest einem resultierenden Schneidscheibeneinheit-Aufstandspunkt P11.1, P11.2 und dem resultierenden Rolleneinheit-Aufstandspunkt P22 maximal 10% oder maximal 20% oder maximal 30% des Durchmessers der Rolle 22.1 beträgt.

In der Seitenansicht in Figur 3, vorzugsweise senkrecht zu der Bewegungsrichtung BR, entnimmt man des Weiteren einen sich ergebenden Projektionsschnittpunkt PS, welcher in der Seitenansicht durch die Außenkontur zumindest einer Schneidscheibe 11.1, 11.2 und durch die Außenkontur der Rolle 22.1 gebildet wird. Ein Abstand D3 zwischen dem Projektionsschnittpunkt PS und dem resultierenden Rolleneinheit-Aufstandspunkt P22 in einer Richtung Y senkrecht zu der Bewegungsrichtung BR kann maximal 5% oder maximal 10% oder maximal 25% oder maximal 50% des Durchmessers der Rolle 22.1 betragen.

Figur 4A zeigt ein erstes Ausführungsbeispiel einer landwirtschaftlichen Arbeitsmaschine 100 gemäß der vorliegenden Erfindung mit einer Mehrzahl an Scharvorrichtungen 1 eines Ausführungsbeispiels gemäß der vorliegenden Erfindung in einer perspektivischen Ansicht. Aus Gründen der Übersichtlichkeit sind in Figur 4A lediglich zwei Scharvorrichtungen 1 gekennzeichnet.

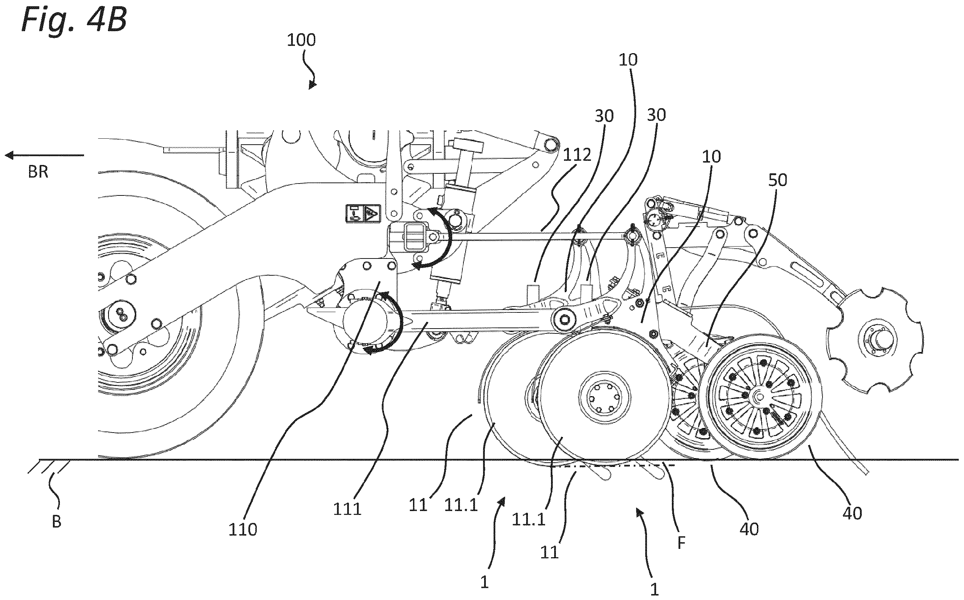

Jede Scharvorrichtung 1 der Scharvorrichtungen 1 in Figur 4A kann im Wesentlichen identisch oder zumindest teilweise ähnlich zu der Scharvorrichtung 1 aus den Figuren 1A bis 3 ausgebildet und/oder konfiguriert sein, wobei der Scharträger 10 geometrisch verändert ausgebildet ist. Die Scharvorrichtungen 1 sind an einem Tragrahmen 110 der landwirtschaftlichen Arbeitsmaschine 100 über Lenker 111, 112 montiert, was graphisch anschaulich aus Figur 4B hervorgeht, welche nachfolgend näher beschrieben wird.

Die landwirtschaftliche Arbeitsmaschine 100 ist bei dem vorliegenden Ausführungsbeispiel eine anhängbare mobile landwirtschaftliche Arbeitsmaschine 100 in Form einer Sämaschine mit einen Vorratsbehälter 120 zur Bevorratung des landwirtschaftlichen Guts. Die landwirtschaftliche Arbeitsmaschine 100 dient vorzugsweise zur Aussaat von körnerförmigem Saatgut und/oder zur Verteilung von körnerförmigem Düngemittel in einer Furche F und umfasst hierzu entsprechende Dosiereinrichtungen mit jeweiligen Leitungen, um das Saatgut und/oder das Düngemittel von dem Vorratsbehälter 120 zu den Leitungseinheiten 30, 31, 32 der Scharvorrichtungen 1 zu transportieren. Aus Gründen der Übersichtlichkeit sind die Leitungen und Dosiereinrichtungen allerdings nicht gekennzeichnet. Diese können beispielsweise nach dem Stand der Technik ausgebildet und/oder konfiguriert sein. Die landwirtschaftliche Arbeitsmaschine 100 dient zur Bewegung und/oder zur Führung der Scharvorrichtungen 1 in der Bewegungsrichtung BR.

Die Scharvorrichtungen 1 sind vorzugsweise quer zu der Bewegungsrichtung BR in einem so genannten Strichabstand voneinander angeordnet oder beabstandet. Der Strichabstand liegt vorzugsweise in einem Bereich zwischen ungefähr 12,5 cm und 25,0 cm. Vorzugsweise beträgt der Strichabstand zwischen einer Scharvorrichtung 1 und einer dazu benachbarten Scharvorrichtung 1 ungefähr 15,0 cm.

Figur 4B zeigt einen vergrößert dargestellten Ausschnitt der landwirtschaftlichen Arbeitsmaschine 100 aus Figur 4A in einer Seitenansicht (Ansicht Y in Figur 4A).

In der Ansicht in Figur 4B ist gut erkennbar, dass in der Bewegungsrichtung BR eine erste Scharvorrichtung 1 und eine zweite Scharvorrichtung 1 an dem Tragrahmen 110 zueinander versetzt angeordnet sind. Dies wird vor allem durch die Lage der Schneidscheibeneinheiten 11 der Scharvorrichtungen 1 deutlich.

Ferner erkennt man in Figur 4B eine Variante der Montage der Scharvorrichtungen 1 an den Tragrahmen 110 unter Verwendung zweier zueinander beabstandeter, gelenkig gelagerter Lenker 111 und 112.

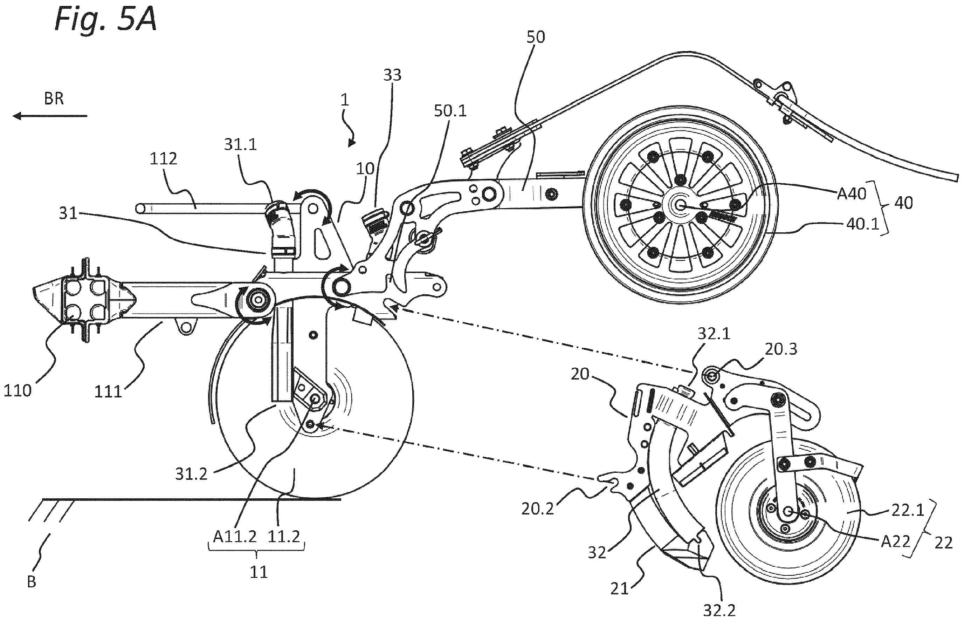

Die Figuren 5A bis 5F zeigen ein zweites Ausführungsbeispiel der Scharvorrichtung 1 gemäß der vorliegenden Erfindung. Die Scharvorrichtung 1 ist vorzugsweise als eine Säscharvorrichtung 1 zur Einbringung eines landwirtschaftlichen Guts in eine Furche F eines Bodens B entlang einer Bewegungsrichtung BR der Scharvorrichtung 1 konfiguriert. Die Furche F ist in den Figuren 5A bis 5F aus Gründen der Übersichtlichkeit ausgeblendet.

Figur 5A zeigt die Scharvorrichtung 1 in einer Seitenansicht und in einem ersten Montagezustand. Die Scharvorrichtung 1 umfasst einen Scharträger 10 zur Montage an einen Tragrahmen 110 einer landwirtschaftlichen Arbeitsmaschine 100 (siehe hierzu beispielsweise Figur 4A). Der Scharträger 10 ist bei dem zweiten Ausführungsbeispiel der Scharvorrichtung 1 an den Tragrahmen 110 der landwirtschaftlichen Arbeitsmaschine 100 über die Lenker 111 und 112 gelenkig und/oder schwenkbar montierbar. Der Scharträger 10 ist abschnittsweise im Wesentlichen plattenförmig, scheibenförmig, rohrförmig (beispielsweise mit einem im Wesentlichen rechteckigen oder quadratischen Querschnitt), und/oder mit einem halboffenen Profil (beispielsweise mit einem C-förmigen Profil) ausgebildet und dient zur Montage weiterer Einheiten, was nachfolgend näher beschrieben wird.

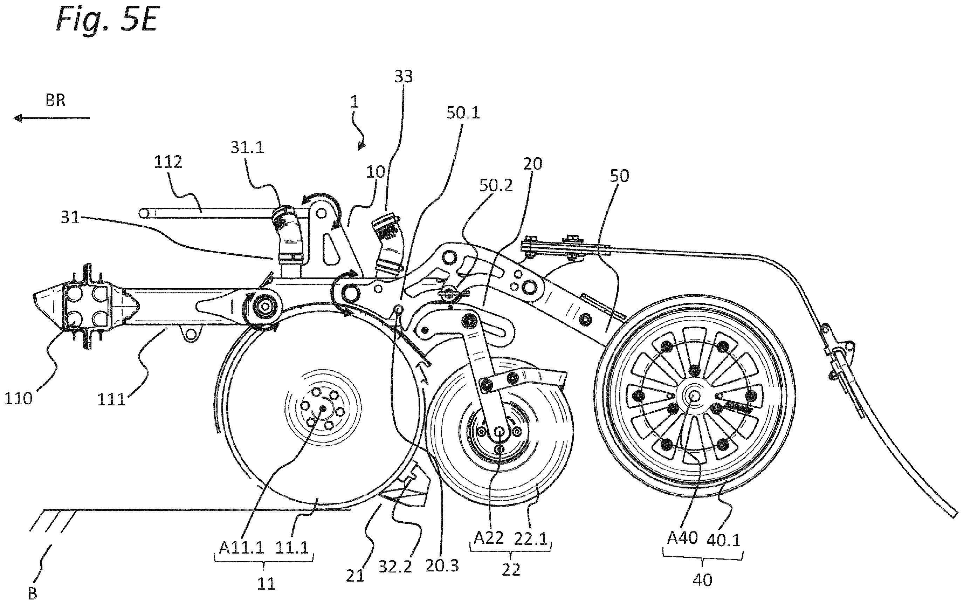

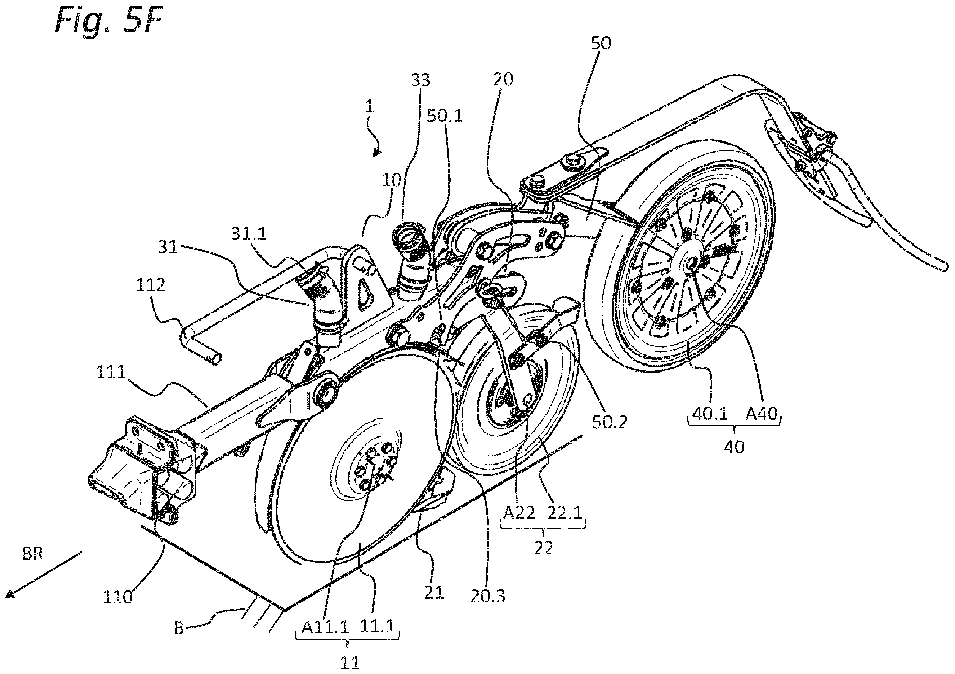

An dem Scharträger 1 ist zur Erzeugung der Furche Feine Schneidscheibeneinheit 11 angeordnet, welche vorzugsweise als eine Doppelschneidscheibeneinheit 11 mit einer ersten Schneidscheibe 11.1 (siehe hierzu die Figuren 5E und 5F) und mit einer zweiten Schneidscheibe 11.2 ausgebildet ist. In Figur 5A ist die zweite Schneidscheibe 11.2 und ihre zugehörige Schneidscheibenachse A11.2 sichtbar. Sowohl die erste Schneidscheibe 11.1 als auch die zweite Schneidscheibe 11.2 sind an dem Scharträger 10 um ihre jeweilige Schneidscheibenachse A11.1 und A11.2 drehbar gelagert, beispielsweise mittels einer Nabe und/oder mittels einem Lagerelement (beispielsweise Wälzlagerelement oder Gleitlagerelement).

Darüber hinaus ist an dem Scharträger 10 eine erste Leitungseinheit 31 zum Transport eines landwirtschaftlichen Guts (beispielsweise Saatgut und/oder Düngemittel) montiert. Die erste Leitungseinheit 31 umfasst einen ersten Einlass 31.1 und einen ersten Auslass 31.2 und ist im Wesentlichen rohrförmig und/oder schlauchförmig ausgebildet. Die erste Leitungseinheit 31 kann zusätzlich zumindest abschnittsweise formstabil und/oder zumindest abschnittsweise elastisch verformbar und somit formvariabel ausgebildet sein. Der erste Auslass 31.2 dient zur Zuführung des landwirtschaftlichen Guts in die Furche F und ist zwischen der ersten Schneidscheibe 11.1 und der zweiten Schneidscheibe 11.2 angeordnet.

Der Scharträger 10 ist ferner zur Montage einer Nachlaufrolleneinheit 40 mit einer Nachlaufrolle 40.1 konfiguriert. Die Nachlaufrolle 40.1 ist an der Schwinge 50 um die Nachlaufrollenachse A40 drehbar gelagert. Die Schwinge 50 ist zur Montage an dem Scharträger 10 drehbar oder schwenkbar gelagert, vorzugsweise mittels einer Bolzenverbindung. Darüber hinaus ist die Schwinge 50 über einen oder vorzugsweise zwei gabelförmige Schwingenaufnahmeabschnitte 50.1 an dem Scharträger 10 und vorzugsweise in Verbindung mit dem Werkzeugträger 20 befestigbar, was nachfolgend noch näher erläutert wird.

Ferner ist an dem Scharträger 10 ein Anschlusselement 33 montiert, welche zur Verbindung mit einer Leitungseinheit 32 konfiguriert ist, um der Leitungseinheit 32 landwirtschaftliches Gut zuzuführen, welches einem Vorratsbehälter 120 (siehe Figur 4A) entnommen ist. Das Anschlusselement 33 kann abschnittsweise stutzenförmig und/oder abschnittsweise muffenförmig und/oder abschnittsweise rohrförmig ausgebildet sein, um vor allem eine Verbindung mit dem Einlass 32.1 der Leitungseinheit 32 herzustellen.

Die Scharvorrichtung 1 ist durch eine konfigurierbare Scharwerkzeugeinheit 20, 21, 22, 32 gekennzeichnet, welche vor allem den Werkzeugträger 20 umfasst. Der Werkzeugträger 20 ist zur Montage an den Scharträger 10 konfiguriert und umfasst hierzu zumindest einen, vorzugsweise mehrere, Aufnahmeabschnitte 20.2 und 20.3. Bei dem ersten Montagezustand in Figur 5A ist der Werkzeugträger 20 noch nicht an den Scharträger 10 montiert, jedoch selbst mit mehreren Einheiten 21, 22 und 32 bestückt.

Der Werkzeugträger 20 ist zur Montage, vorzugsweise zur direkten und/oder unmittelbaren Montage, einer Kufeneinheit 21, einer Rolleneinheit 22 und einer zweiten Leitungseinheit 32 konfiguriert und umfasst hierzu jeweilige Werkzeugmontageabschnitte, welche aus Gründen der Übersichtlichkeit in den Figuren 5A bis 5F nicht gekennzeichnet sind.

Zur Realisierung einer konfigurierbaren Scharwerkzeugeinheit 20, 21, 22, 32 können unterschiedlich ausgebildete Kufeneinheiten 21, Rolleneinheiten 22 und/oder Leitungseinheiten 32, beispielsweise aus einem Baukastensystem, an den Werkzeugträger 20 montiert werden. Der Werkzeugträger 20 und im Weiteren die Scharwerkzeugeinheit 20, 21, 22 und 32 kann somit individuell konfiguriert und/oder unabhängig von weiteren Einheiten 11, 31, 40 und/oder Komponenten der Scharvorrichtung 1 montiert und/oder eingestellt werden. Bei dem vorliegenden Ausführungsbeispiel umfasst der Werkzeugträger 20 die Kufeneinheit 21, die Rolleneinheit 22 und die zweite Leitungseinheit 32.

Die Werkzeugmontageabschnitte des Werkzeugträgers 20 können grundsätzlich zur Ausbildung einer lösbaren im Wesentlichen formschlüssigen und/oder im Wesentlichen kraftschlüssigen Verbindung mit einer jeweiligen Einheit 21, 22, 32 konfiguriert sein. Die lösbare im Wesentlichen formschlüssige und/oder im Wesentlichen kraftschlüssige Verbindung kann zumindest eine von folgenden Verbindungen umfassen: eine Schraubverbindung, eine Steckverbindung, eine Schnappverbindung, und/oder eine Rastverbindung. Die Werkzeugmontageabschnitte können beispielsweise bolzenförmig, hakenförmig, ösenförmig und/oder als gabelförmige Steckabschnitte ausgebildet sein und/oder zumindest einen solchen umfassen.

Die zweite Leitungseinheit 32 umfasst einen zweiten Einlass 32.1 und einen zweiten Auslass 32.2 und ist im Wesentlichen rohrförmig und/oder schlauchförmig ausgebildet. Die zweite Leitungseinheit 32 kann zusätzlich zumindest abschnittsweise formstabil und/oder zumindest abschnittsweise elastisch verformbar und somit formvariabel ausgebildet sein. Der zweite Auslass 32.2 dient zur Zuführung des landwirtschaftlichen Guts in die Furche F und ist vorzugsweise an der Kufeneinheit 21 angeordnet und/oder montiert.

Beispielsweise kann der Werkzeugmontageabschnitt für die Kufeneinheit 21 zur Ausbildung von zumindest einer Schraubverbindung konfiguriert sein. Der Werkzeugmontageabschnitt für die zweite Leitungseinheit 32 kann zur Ausbildung einer Schellenverbindung konfiguriert sein. Der Werkzeugmontageabschnitt für die Rolleneinheit 22 kann zur Ausbildung einer entlang eines Langlochs verschiebbaren Schraubverbindung konfiguriert sein.

Bei dem vorliegenden Ausführungsbeispiel ist ferner die Kufeneinheit 21 zur Montage der zweiten Leitungseinheit 32, das heißt des zweiten Auslasses 32.2 der zweiten Leitungseinheit 32 konfiguriert. Demnach ist ein Abschnitt der zweiten Leitungseinheit 32 an dem Werkzeugträger 20 und ein weiterer Abschnitt der zweiten Leitungseinheit 32, vorzugsweise zumindest der zweite Auslass 32.2 an der Kufeneinheit 21 montiert. Die Kufeneinheit 21 kann für die zweite Leitungseinheit 32 oder für zumindest einen Abschnitt der zweiten Leitungseinheit 32 eine tragende Struktur, das heißt eine Tragstruktur bilden, was beispielsweise zu einer weiteren Erhöhung der Stabilität der konfigurierbaren Scharwerkzeugeinheit 20, 21, 22, 32 führt.

Die konfigurierbare Scharwerkzeugeinheit 20, 21, 22, 32 wird somit durch den Werkzeugträger 20, die Kufeneinheit 21, die Rolleneinheit 22 und durch die Leitungseinheit 32 gebildet.

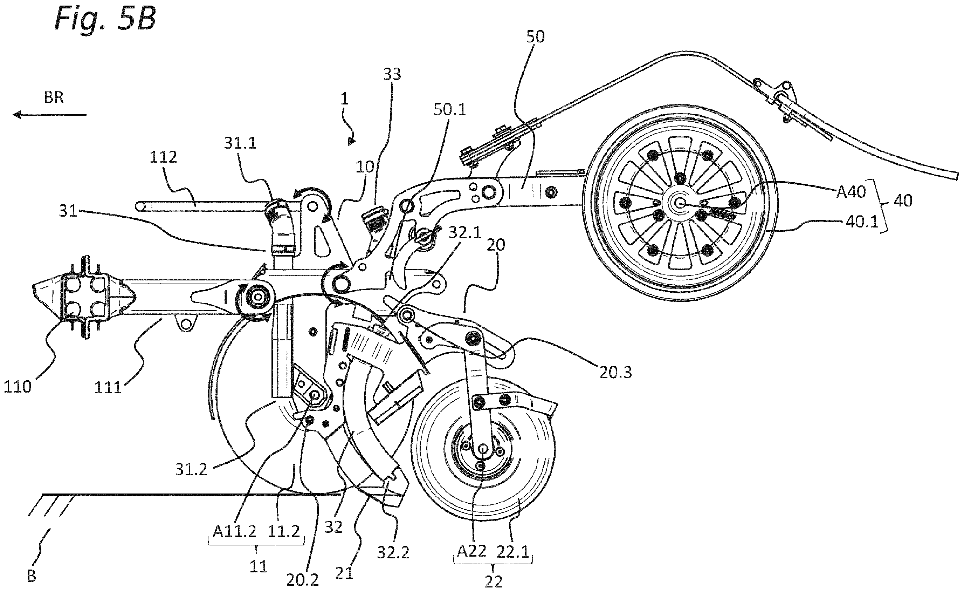

Figur 5B zeigt die Scharvorrichtung 1 aus Figur 5A in einer Seitenansicht und in einem zweiten Montagezustand. Bei dem zweiten Montagezustand ist der Werkzeugträger 20 mit zumindest einem gabelförmigen ersten Aufnahmeabschnitt 20.2 in zumindest einem Bolzen, das heißt einem bolzenförmigen Abschnitt des Scharträgers 10 eingehängt, wobei der zumindest eine bolzenförmige Abschnitt in Richtung des Bodens B gesehen an dem Scharträger 10 unterhalb der Schneidscheibenachsen A11.1 und A11.2 angeordnet ist.

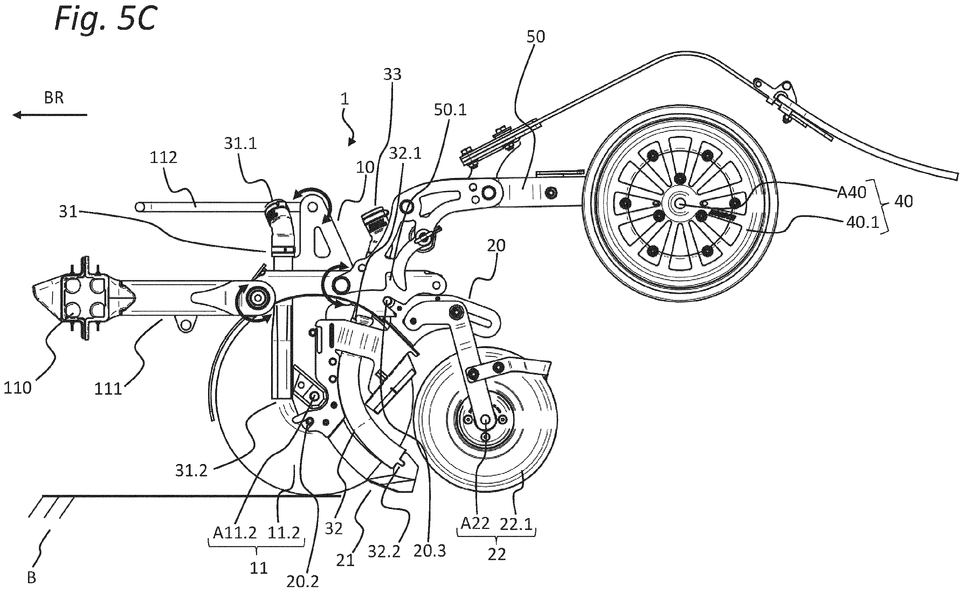

Figur 5C zeigt die Scharvorrichtung 1 aus Figur 5A in einer Seitenansicht und in einem dritten Montagezustand. Bei dem dritten Montagezustand ist der Werkzeugträger 20 mit zumindest einem bolzenförmigen zweiten Aufnahmeabschnitt 20.3 an zumindest einem gabelförmigen Abschnitt des Scharträgers 10 eingehängt.

Gut erkennbar ist die zwischen dem zweiten Einlass 32.1 und dem Anschlusselement 33 hergestellte Verbindung zur Zuführung und/oder zum Transport von landwirtschaftlichem Gut zu der zweiten Leitungseinheit 32 und somit zu dem zweiten Auslass 32.2 in einem Betriebszustand der Scharvorrichtung 1.

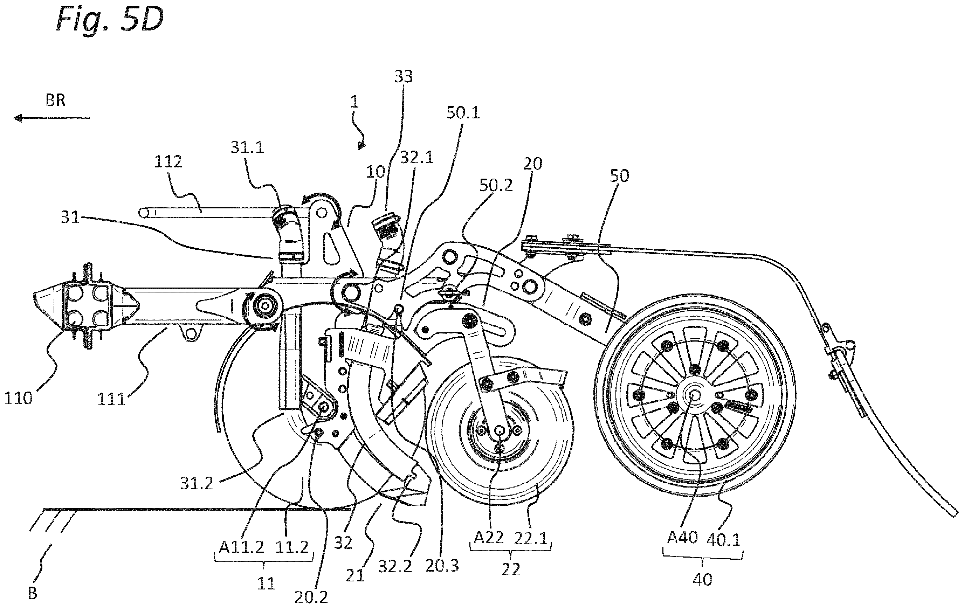

Figur 5D zeigt die Scharvorrichtung 1 aus Figur 5A in einer Seitenansicht und in einem vierten Montagezustand, bei welchem die Schwinge 50 mit der Nachlaufrolleneinheit 40 über zumindest einen Schwingenaufnahmeabschnitt 50.1 an dem zumindest einen bolzenförmigen zweiten Aufnahmeabschnitt 20.3 des Werkzeugträgers 20 eingehängt ist (siehe hierzu auch Figur 5F). Der vierte Montagezustand stellt den fertigen Montagezustand (Endmontagezustand oder Herstellungszustand) dar, bei welchem die Scharvorrichtung 1 selbst fertig montiert ist, wobei in Figur 5D zur näheren Veranschaulichung die erste Schneidscheibe 11.1 der Schneidscheibeneinheit 11 ausgeblendet ist.

Der Werkzeugträger 20, der Scharträger 10 und die Schwinge 50 sind somit unter anderem über den zumindest einen zweiten Aufnahmeabschnitt 20.3, zumindest einen Schwingenaufnahmeabschnitt 50.1 und den zumindest einen gabelförmigen Abschnitt des Scharträgers 10 miteinander und ohne Bewegungsfreiheit zwangsgekoppelt und entsprechend befestigt.

Figur 5E zeigt die Scharvorrichtung 1 aus Figur 5D in einer Seitenansicht, wobei zur näheren Veranschaulichung die erste Schneidscheibe 11.1 der Schneidscheibeneinheit 11 eingeblendet ist, welche allerdings nun die zweite Schneidscheibe 11.2 der Schneidscheibeneinheit 11 verdeckt.

Zur starren oder unbeweglichen Befestigung und Sicherung der Schwinge 50 an dem Scharträger 10 und mitunter des Werkzeugträgers 20 und somit der Scharwerkzeugeinheit 20, 21, 22, 32 dient beispielsweise zumindest eine Bolzenverbindung 50.2, welche zwischen der Schwinge 50 und dem Scharträger 10 ausgebildet ist.

Durch das Vorhandensein einer ersten Leitungseinheit 31 und einer zweiten Leitungseinheit 32 ist es beispielsweise möglich, in einem Betriebszustand der Scharvorrichtung 1 nur die erste Leitungseinheit 31 oder nur die zweite Leitungseinheit 32 mit dem landwirtschaftlichen Gut zu versorgen. In einem weiteren oder alternativen Betriebszustand der Scharvorrichtung 1 ist es möglich, beide Leitungseinheiten 31 und 32 im Wesentlichen gleichzeitig mit dem landwirtschaftlichen Gut zu versorgen.

Das in den Figuren 5A bis 5F dargestellte Ausführungsbeispiel der Scharvorrichtung 1 kann alternativ anstelle von einer ersten Leitungseinheit 31 und einer zweiten Leitungseinheit 32 auch nur eine einzige Leitungseinheit 31, beispielsweise nur die erste Leitungseinheit 31 oder nur die zweite Leitungseinheit 32, umfassen.

Die vorliegende Erfindung ist nicht auf die vorstehend beschriebenen Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Vorzugsweise beansprucht die vorliegende Erfindung auch Schutz für den Gegenstand und die Merkmale der Unteransprüche unabhängig von den in Bezug genommenen Ansprüchen.

### Bezugszeichenliste

- 1: Scharvorrichtung
- 10: Scharträger
- 11: Schneidscheibeneinheit
- 11.1: Schneidscheibe
- 11.2: Schneidscheibe
- 20: Werkzeugträger
- 20.1: Federelement
- 20.2: Aufnahmeabschnitt
- 20.3: Aufnahmeabschnitt
- 21: Kufeneinheit
- 22: Rolleneinheit
- 22.1: Rolle
- 30: Leitungseinheit
- 30.2: Auslass
- 31: Leitungseinheit
- 31.1: Einlass
- 31.2: Auslass
- 32: Leitungseinheit
- 32.1: Einlass
- 32.2: Auslass
- 33: Anschlusselement
- 40: Nachlaufrolleneinheit
- 40.1: Nachlaufrolle
- 50: Schwinge
- 50.1: Schwingenaufnahmeabschnitt
- 50.2: Bolzenverbindung
- 100: landwirtschaftliche Arbeitsmaschine
- 110: Tragrahmen
- 111: Tragarm, Lenker
- 112: Lenker
- 120: Vorratsbehälter
- A11.1: Schneidscheibenachse
- A11.2: Schneidscheibenachse
- A20: Werkzeugträgerachse
- A22: Rollenachse
- A40: Nachlaufrollenachse
- B: Boden
- BR: Bewegungsrichtung
- D1: Abstand
- D2: Abstand
- D3: Abstand
- F: Furche
- P11.1: Schneidscheibeneinheit-Aufstandspunkt
- P11.2: Schneidscheibeneinheit-Aufstandspunkt
- P22: Rolleneinheit-Aufstandspunkt
- P30: Auslass-Projektionspunkt
- P31: Auslass-Projektionspunkt
- P32: Auslass-Projektionspunkt
- PR: Projektion
- PS: Projektionsschnittpunkt
- VE: vertikale Ebene
- X: Ansicht
- Y: Ansicht

## Patentansprüche

1. Scharvorrichtung (1), vorzugsweise Säscharvorrichtung (1), zur Einbringung eines landwirtschaftlichen Guts in eine Furche (F) eines Bodens (B) entlang einer Bewegungsrichtung (BR) der Scharvorrichtung (1),
mit einem Scharträger (10) zur Montage an einen Tragrahmen (110) einer landwirtschaftlichen Arbeitsmaschine (100),
wobei an dem Scharträger (10) eine Schneidscheibeneinheit (11) zur Erzeugung der Furche (F) angeordnet ist,
wobei die Scharvorrichtung (1) zur Bildung einer konfigurierbaren Scharwerkzeugeinheit (20, 21, 22, 32) einen Werkzeugträger (20) umfasst, wobei der Werkzeugträger (20) zumindest zur Montage einer Kufeneinheit (21) der Scharvorrichtung (1) zur Erzeugung der Furche (F) und einer Rolleneinheit (22) der Scharvorrichtung (1) zum Abbremsen des landwirtschaftlichen Guts im Bereich der Furche (B) und/oder zum Andrücken des landwirtschaftlichen Guts im Bereich der Furche (B) konfiguriert ist, und
wobei der Werkzeugträger (20) zur Montage an dem Scharträger (10) und/oder zur Montage an dem Tragrahmen (110) konfiguriert ist.

2. Scharvorrichtung (1) nach Anspruch 1,
wobei der Werkzeugträger (20) als ein separates Einzelteil ausgebildet ist und/oder wobei vorzugsweise der Werkzeugträger (20) an dem Scharträger (10) montiert ist.

3. Scharvorrichtung (1) nach Anspruch 1 oder 2,
wobei der Werkzeugträger (20) zur autarken und/oder zumindest zur von dem Scharträger (10) unabhängigen Montage der Kufeneinheit (21) und/oder der Rolleneinheit (22) an den Werkzeugträger (20) konfiguriert ist.

4. Scharvorrichtung (1) nach einem der vorhergehenden Ansprüche,
wobei der Werkzeugträger (20) zur drehbaren und/oder translatorischen Lagerung an dem Scharträger (10) und/oder an dem Tragrahmen (110) konfiguriert ist, und/oder
wobei der Werkzeugträger (20) zur federnden Lagerung, vorzugsweise mittels zumindest einem Zugfederelement und/oder mittels zumindest einem Druckfederelement (20.1), an dem Scharträger (10) und/oder an dem Tragrahmen (110) konfiguriert ist, und/oder
wobei der Werkzeugträger (20) zur Lagerung mittels einer Parallelogrammführung an dem Scharträger (10) und/oder an dem Tragrahmen (110) konfiguriert ist.

5. Scharvorrichtung (1) nach einem der vorhergehenden Ansprüche,
wobei die Schneidscheibeneinheit (11) als Doppelschneidscheibeneinheit (11; 11.1, 11.2) mit einer ersten Schneidscheibe (11.1) und mit einer zweiten Schneidscheibe (11.2) ausgebildet ist, und
wobei in einer Ansicht in der Bewegungsrichtung (BR) die Kufeneinheit (21) und/oder die Rolleneinheit (22) zumindest abschnittsweise zwischen der ersten Schneidscheibe (11.1) und der zweiten Schneidscheibe (11.2) angeordnet ist.

6. Scharvorrichtung (1) nach einem der vorhergehenden Ansprüche,
wobei die Rolleneinheit (22) eine Rolle (22.1) mit einer Rollenachse (A22), um welche die Rolle (22.1) drehbar gelagert ist, umfasst, und
wobei in einer Ansicht (X) senkrecht zu der Bewegungsrichtung (BR) die Rollenachse (A22) innerhalb einer Außenkontur einer ersten Schneidscheibe (11.1) und/oder einer Außenkontur einer zweiten Schneidscheibe (11.2) der Schneidscheibeneinheit (11), vorzugsweise innerhalb eines definierten Bereichs innerhalb einer Außenkontur einer ersten Schneidscheibe (11.1) und/oder einer Außenkontur einer zweiten Schneidscheibe (11.2) der Schneidscheibeneinheit (11), angeordnet ist, oder
wobei in einer Ansicht (X) senkrecht zu der Bewegungsrichtung (BR) die Rollenachse (A22) außerhalb einer Außenkontur einer ersten Schneidscheibe (11.1) und/oder außerhalb einer Außenkontur einer zweiten Schneidscheibe (11.2) der Schneidscheibeneinheit (11), vorzugsweise innerhalb eines definierten Bereichs außerhalb einer Außenkontur einer ersten Schneidscheibe (11.1) und/oder einer Außenkontur einer zweiten Schneidscheibe (11.2) der Schneidscheibeneinheit (11), angeordnet ist.

7. Scharvorrichtung (1) nach einem der vorhergehenden Ansprüche,
wobei die Scharvorrichtung (1) eine Nachlaufrolleneinheit (40) zur Führung der Scharvorrichtung (1) in der Furche (F) und/oder zum Andrücken des Bodens (B) in der Furche (F) und/oder zum Schließen der Furche (B) aufweist,
wobei die Nachlaufrolleneinheit (40) dem Werkzeugträger (20) und/oder der Schneidscheibeneinheit (11) in der Bewegungsrichtung (BR) nachgeordnet ist.

8. Scharvorrichtung (1) nach einem der vorhergehenden Ansprüche,
wobei die Scharvorrichtung (1) zumindest eine Leitungseinheit (30, 31, 32) zum Transport des landwirtschaftlichen Guts umfasst, wobei die zumindest eine Leitungseinheit (30, 31, 32) zumindest einen Auslass (30.2, 31.2, 32.2) zur Zuführung des landwirtschaftlichen Guts in die Furche (F) umfasst,
wobei in einer Ansicht entgegen der Bewegungsrichtung (BR) der zumindest eine Auslass (30.2, 31.2, 32.2) vor der Kufeneinheit (21) und vor der Rolleneinheit (22) angeordnet ist, oder
wobei der zumindest eine Auslass (30.2, 31.2, 32.2) zwischen der Kufeneinheit (21) und der Rolleneinheit (22) angeordnet ist, oder
wobei der zumindest eine Auslass (30.2, 31.2, 32.2) an der Kufeneinheit (21) angeordnet ist.

9. Scharvorrichtung (1) nach einem der vorhergehenden Ansprüche,
wobei die Scharvorrichtung (1) zumindest eine erste Leitungseinheit (31) zum Transport des landwirtschaftlichen Guts in Form von Saatgut und zumindest eine zweite Leitungseinheit (32) zum Transport des landwirtschaftlichen Guts in Form von Düngemittel umfasst,
wobei die zumindest eine erste Leitungseinheit (31) zumindest einen ersten Auslass (31.2) zur Zuführung des landwirtschaftlichen Guts in die Furche (F) umfasst und die zumindest eine zweite Leitungseinheit (32) zumindest einen zweiten Auslass (32.2) zur Zuführung des landwirtschaftlichen Guts in die Furche (F) umfasst,
wobei in einer Ansicht entgegen der Bewegungsrichtung (BR) der zumindest eine erste Auslass (31.2) und der zumindest eine zweite Auslass (32.2) vor der Kufeneinheit (21) und vor der Rolleneinheit (22) oder zwischen der Kufeneinheit (21) und der Rolleneinheit (22) angeordnet ist, oder
wobei in einer Ansicht entgegen der Bewegungsrichtung (BR) zumindest ein Auslass (31.2) des zumindest einen ersten Auslasses (31.2) und des zumindest einen zweiten Auslasses (32.2) vor der Kufeneinheit (21) und vor der Rolleneinheit (22) angeordnet ist, und zumindest ein weiterer Auslass (32.2) des zumindest einen ersten Auslasses (31.2) und des zumindest einen zweiten Auslasses (32.2) zwischen der Kufeneinheit (21) und der Rolleneinheit (22) angeordnet ist.

10. Scharvorrichtung (1) nach Anspruch 8 oder 9,
wobei zumindest eine Leitungseinheit (30, 31, 32) zumindest abschnittsweise rohrförmig und/oder kanalförmig ausgebildet ist, und/oder
wobei zumindest eine Leitungseinheit (30, 31, 32) zumindest abschnittsweise formstabil und/oder elastisch verformbar ausgebildet ist, und/oder
wobei zumindest eine Leitungseinheit (30, 31, 32) zumindest abschnittsweise an dem Werkzeugträger (20) montiert ist.

11. Scharvorrichtung (1) nach Anspruch 8 oder 10,
wobei der Werkzeugträger (20) zur Montage der zumindest einen Leitungseinheit (30, 31, 32) konfiguriert ist, und
einen Werkzeugmontageabschnitt für die zumindest eine Leitungseinheit (30, 31, 32), einen Werkzeugmontageabschnitt für die Kufeneinheit (21) und einen Werkzeugmontageabschnitt für die Rolleneinheit (22) umfasst, wobei die jeweiligen Werkzeugmontageabschnitte an dem Werkzeugträger (20) zueinander beabstandet angeordnet und/oder ausgebildet sind.

12. Scharvorrichtung (1) nach Anspruch 11,
wobei die Kufeneinheit (21) zur Montage der zumindest einen Leitungseinheit (30, 31, 32), vorzugsweise des zumindest einen Auslasses (30.2, 31.2, 32.2), konfiguriert ist.

13. Scharvorrichtung (1) nach einem der vorhergehenden Ansprüche,
wobei die Kufeneinheit (21) zumindest eine erste Kufenwand und zumindest eine zweite Kufenwand umfasst,
wobei die zumindest eine erste Kufenwand und die zumindest eine zweite Kufenwand unter Ausbildung eines Winkels zueinander und/oder keilförmig zueinander angeordnet sind, und/oder
wobei zumindest ein Auslass (30.2, 31.2, 32.2) zumindest einer Leitungseinheit (30, 31, 32) zum Transport des landwirtschaftlichen Guts zumindest abschnittsweise zwischen der zumindest einen ersten Kufenwand und der zumindest einen zweiten Kufenwand angeordnet ist, vorzugsweise zumindest abschnittsweise von der zumindest einen ersten Kufenwand und der zumindest einen zweiten Kufenwand ummantelt ist.

14. Scharvorrichtung (1) nach einem der vorhergehenden Ansprüche 8 bis 13,
wobei in einer Projektion (PR) senkrecht zu der Bewegungsrichtung (BR) in Richtung des Bodens (B) die Rolleneinheit (22) einen resultierenden Rolleneinheit-Aufstandspunkt (P22), zumindest eine Schneidscheibe (11.1, 11.2) der Schneidscheibeneinheit (11) zumindest einen resultierenden Schneidscheibeneinheit-Aufstandspunkt (P11.1, P11.2) und zumindest ein Auslass (30.2, 31.2, 32.2) zumindest einen resultierenden Auslass-Projektionspunkt (P30, P31, P32) an dem Boden (B) ausbilden,
wobei in einer Ansicht in der Bewegungsrichtung (BR) der zumindest eine resultierende Schneidscheibeneinheit-Aufstandspunkt (P11.1, P11.2) hinter dem resultierenden Rolleneinheit-Aufstandspunkt (P22) und vor dem zumindest einen resultierenden Auslass-Projektionspunkt (P31) angeordnet ist, oder hinter dem resultierenden Rolleneinheit-Aufstandspunkt (P22) und hinter dem zumindest einen resultierenden Auslass-Projektionspunkt (P30, P31, P32) angeordnet ist.

15. Scharvorrichtung (1) nach einem der vorhergehenden Ansprüche,
wobei die Scharvorrichtung (1) zumindest ein Führungselement zum Führen des landwirtschaftlichen Guts in die Furche (F) umfasst, wobei das zumindest eine Führungselement zumindest abschnittsweise flach und/oder plattenförmig und/oder gewölbt ausgebildet ist, und
wobei das zumindest eine Führungselement an zumindest einem Auslass (30.2, 31.2, 32.2) zumindest einer Leitungseinheit (30, 31, 32) zum Transport des landwirtschaftlichen Guts ausgebildet ist oder an dem Werkzeugträger (20) montiert ist.

16. Landwirtschaftliche Arbeitsmaschine (100), vorzugsweise mobile anhängbare landwirtschaftliche Arbeitsmaschine (100), zur Bearbeitung eines Bodens (B) und/oder zur Verteilung eines landwirtschaftlichen Guts in einen Boden (B),
mit zumindest einer ersten Scharvorrichtung (1) nach einem der vorhergehenden Ansprüche und mit zumindest einer zweiten Scharvorrichtung (1) nach einem der vorhergehenden Ansprüche,
sowie mit einem Tragrahmen (110), an welchem die zumindest eine erste Scharvorrichtung (1) und die zumindest eine zweite Scharvorrichtung (1) zur Bewegung in einer Bewegungsrichtung (BR) und/oder höhenverstellbar montiert ist.

17. Landwirtschaftliche Arbeitsmaschine (100) nach Anspruch 16,
wobei die zumindest eine erste Scharvorrichtung (1) und die zumindest eine zweite Scharvorrichtung (1) in einem Strichabstand voneinander beabstandet angeordnet sind, wobei der Strichabstand in einem Bereich zwischen 12,5 cm und 25,0 cm liegt, vorzugsweise 15,0 cm beträgt, und/oder
wobei die zumindest eine erste Scharvorrichtung (1) und/oder die zumindest eine zweite Scharvorrichtung (1) über eine Schwingenanordnung oder über eine Lenkeranordnung (111, 112) einer Parallelogrammführung mit dem Tragrahmen (110) verbunden ist, und/oder
wobei in einer Ansicht in der Bewegungsrichtung (BR) die zumindest eine erste Scharvorrichtung (1) und die zumindest eine zweite Scharvorrichtung (1) an dem Tragrahmen (110) zueinander versetzt angeordnet sind, vorzugsweise die Schneidscheibeneinheit (11) der zumindest einen ersten Scharvorrichtung (1) zu der Schneidscheibeneinheit (11) der zumindest einen zweiten Scharvorrichtung (1) versetzt angeordnet ist.
